# EUROPÄISCHE PATENTSCHRIFT

(11) **EP 3 697 835 B1**
(45) Veröffentlichungstag und Bekanntmachung des Hinweises auf die Patenterteilung: **08.12.2021**
(21) Anmeldenummer: 18786713.0
(22) Anmeldetag: 09.10.2018
(51) Int. Cl.: C08K 5/5313

(54) **FLAMMWIDRIGE UND FARBSTABILE POLYAMIDFORMMASSEN**
FLAME-RETARDANT AND COLOR-STABLE POLYAMIDE MOLDING COMPOUNDS
MASSES DE MOULAGE IGNIFUGES À BASE DE POLYAMIDE, DE COULEUR STABLE

(30) Priorität: 16.10.2017 DE 102017218453
(43) Veröffentlichungstag der Anmeldung: 26.08.2020
(73) Patentinhaber: Clariant International Ltd, 4132 Muttenz (CH)
(72) Erfinder: HÖROLD, Sebastian, 86420 Diedorf (DE); LEUSCHNER, Eva-Maria, 86163 Augsburg (DE); SCHLOSSER, Elke, 86163 Augsburg (DE)
(74) Vertreter: Jacobi, Carola
(86) Internationale Anmeldenummer: PCT/EP2018/077483
(87) Internationale Veröffentlichungsnummer: WO 2019/076688

(56) Entgegenhaltungen:
- WO-A1-2012/007124
- WO-A1-2014/135256

## Beschreibung

Die Erfindung betrifft flammwidrige und farbstabile Polyamidformmassen und ihre Verwendung.

Für thermoplastische Polymere haben sich Salze von Phosphinsäuren (Phosphinate) als wirksame flammhemmende Zusätze erwiesen (EP-A-0699708, DE-A-2252258 und DE-A-2447727). Synergistische Kombinationen von Phosphinaten mit bestimmten stickstoffhaltigen Verbindungen wirken in einer Reihe von Polymeren als Flammschutzmittel effektiver als die Phosphinate allein (PCT/EP97/01664, DE-A-19734437 und DE-A-19737727).

Die DE-A-19614424 beschreibt Phosphinate in Verbindung mit Stickstoffsynergisten in Polyestern und Polyamiden. Die DE-A-19933901 beschreibt Phosphinate in Kombination mit Melaminpolyphosphat als Flammschutzmittel für Polyester und Polyamide, wobei es aber zu partiellem Polymerabbau sowie zu Verfärbungen des Polymers, insbesondere bei hohen Verarbeitungstemperaturen, sowie Ausblühungen bei feucht-warmer Lagerung kommt.

Zur weiteren Verbesserung der Thermostabilität wird in der WO-A-2012/045414 die Kombination aus einem Phosphinsäuresalz mit einem Salz der phosphorigen Säure eingesetzt. Hierbei wird die Flammschutzwirkung der Phosphinsäuresalze deutlich verbessert werden, insbesondere in aliphatischen Polyamiden. Gegenüber der Verwendung von Melaminpolyphosphat als Synergist werden keine Ausblühungen nach feucht-warm Lagerung beobachtet.

Die WO-A-2014/135256 beschreibt flammwidrige Polyamide mit einem Phosphinsäuresalz, einem Salz der phosphorigen Säure als Synergist sowie Verstärkungsstoffe und weiteren Additive. Die so erhaltenen Polyamidformmassen zeigen gute thermische Stabilität und keine Migrationsneigung. Die Brandklasse UL 94 V-0 wird erreicht sowie eine Kriechfestigkeit (Comparative Tracking Index, CTI) von 600 Volt.

Bei Lagerung von dunkel eingefärbten Polyamid-Formmassen mit Phosphinaten als Flammschutzmittel in Wasser wird allerdings eine Farbänderung beobachtet, insbesondere eine Farbänderung von schwarzen Formmassen zu grau. Dieser Effekt tritt bei verstärkten und unverstärkten Polyamiden nach Lagerung von Probekörpern für 1 bis 7 Tage in Wasser bei Raumtemperatur auf. Dies kann insbesondere in Automobilanwendungen ein Problem sein, wo die Beständigkeit von Polymer- Formmassen gegen verschiedene Medien, z.B. Scheibenwischwasser, geprüft wird.

Es war daher Aufgabe der vorliegenden Erfindung flammgeschützter Polyamide zur Verfügung zu stellen, die mit halogenfreiem Flammschutz eine hohe Farbstabilität bei Wasserlagerung, gute mechanische Eigenschaften sowie geringe Ausblühungen aufweisen und UL 94 V-0 sowie GWFI 960°C von 3,2 mm bis 0,4 mm Wandstärke bestehen.

Gelöst wird diese Aufgabe durch den Zusatz mindestens einer weiteren Polymerkomponente ungleich Polyamid zu Polyamiden mit Phosphinaten und gegebenenfalls Synergisten als Flammschutzmittel sowie optional die Verwendung eines Compatibilizers für die Polymerkomponenten.

Gegenstand der Erfindung ist daher eine flammhemmende Polyamidzusammensetzung, enthaltend
als Komponente A) 1 bis 96 Gew.-% eines oder mehrere thermoplastische Polyamide, als Komponente B) 2 bis 25 Gew.-% eines Diorganylphosphinsäuresalzes der Formel (I) 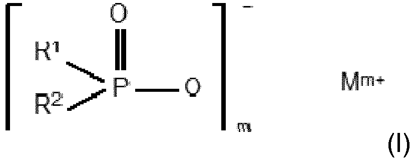 worin
   R¹ und R² gleich oder verschieden sind und C₁-C₁₈-Alkyl linear, verzweigt oder cyclisch, C₆-C₁₈-Aryl, C₇-C₁₈-Arylalkyl und/oder C₇-C₁₈-Alkylaryl,
   M Mg, Ca, Al, Sb, Sn, Ge, Ti, Zn, Fe, Zr, Ce, Bi, Sr, Mn, Li, Na, K und/oder eine protonierte Stickstoffbase;
   m 1 bis 4;
   n 1 bis 4;
   bedeuten,
als Komponente C) 2 - 20 Gew.-% mindestens eine weitere Polymerkomponente, ausgewählt aus den Klassen thermoplastische Polyester und Polyesterelastomere,
als Komponente D) 0 bis 20 Gew.-% eines Salzes der phosphorigen Säure der allgemeinen Formel (II)

   [HP(=O)O₂]²⁻M ^{m+} (II)

   worin
   - M: Mg, Ca, Al, Sb, Sn, Ge, Ti, Zn, Fe, Zr, Ce, Bi, Sr, Mn, Li, Na und/oder K bedeuten,
als Komponente E) 0 bis 20 Gew.-% eines oder mehrerer Kondensationsprodukte des Melamins und/oder Umsetzungsprodukte von Melamin mit Phosphorsäuren und/oder Melamincyanurat,
als Komponente F) 0 bis 50 Gew.-% Füll- und/oder Verstärkungsstoff,
als Komponente G) 0 - 5% eines Verträglichkeitsvermittlers für die Polymerkomponenten
als Komponente H) 0 bis 2 Gew.-% Phosphit oder Phosphonit oder Mischungen davon und als Komponente I) 0 bis 2 Gew.-% eines Esters oder Salzes von langkettigen aliphatischen Carbonsäuren (Fettsäuren), die typischerweise Kettenlängen von C₁₄ bis C₄₀ aufweisen, wobei die Summe der Komponenten immer 100 Gew.-% beträgt.

Bevorzugt handelt es sich bei den Polyamiden um Polyamid 6 oder Polyamid 66 oder Mischungen von Polyamid 6 mit Polyamid 66 und/oder um Polyphthalamide.

Bevorzugt sind R¹, R² in Formel (I) gleich oder verschieden und bedeuten Methyl, Ethyl, n-Propyl, iso-Propyl, n-Butyl, tert.-Butyl, n-Pentyl, Hexyl und/oder Phenyl.

Bevorzugt handelt es sich bei den thermoplastischen Polyestern und Polyesterelastomeren um Polyalkylenterephthalate.

Bevorzugt handelt es bei den Polyalkylenterephthalaten um Polyethylentherephthalat, Polybutylentherephthalat und/oder Copolyester-Elastomere.

Bevorzugt handelt es sich bei der Komponente D) um Umsetzungsprodukte von phosphoriger Säure mit Aluminiumverbindungen.

Besonders bevorzugt handelt es sich bei der Komponente D) um Aluminiumphosphit [Al(H₂PO₃)₃], sekundäres Aluminiumphosphit [Al₂(HPO₃)₃], basisches Aluminiumphosphit [Al(OH)(H₂PO₃)₂*2aq], Aluminiumphosphittetrahydrat [Al₂(HPO₃)₃*4aq], Aluminiumphosphonat, Al₇(HPO₃)₉(OH)₆(1,6-Hexandiamin)_{1,5}*12H₂O, Al₂(HPO₃)³*xAl₂O₃*nH₂O mit x = 1 - 2,27 und n = 1 - 50 und/oder Al₄H₆P₁₆O₁₈ handelt oder um Aluminiumphosphite der Formeln (III), (IV) und/oder (V), wobei

Formel (III): Al₂(HPO₃)₃ x (H₂O)_{q}

umfasst und
- q: 0 bis 4 bedeutet;

Formel (IV) Al_{2,00}M_{z}(HPO₃)_{y}(OH)ᵥ x (H₂O)_{w}

umfasst und
- M: Alkalimetallionen,
- z: 0,01 bis 1,5,
- y: 2,63 bis 3,5,
- v: 0 bis 2 und
- w: 0 bis 4 bedeutet;
Formel (V) Al_{2,00}(HPO₃)u(H₂O₃)t x (H₂O)ₛ

umfasst und
- u: 2 bis 2,99 und
- t: 2 bis 0,01 und
- s: 0 bis 4 bedeutet,
oder das Aluminiumphosphit Mischungen von Aluminiumphosphit der Formel (III) mit schwerlöslichen Aluminiumsalzen und stickstofffreien Fremdionen, Mischungen von Aluminiumphosphit der Formel (IIII) mit Aluminiumsalzen, um Mischungen von Aluminiumphosphiten der Formeln (III) bis (V) mit Aluminiumphosphit [Al(H₂PO₃)₃], mit sekundäres Aluminiumphosphit [Al₂(HPO₃)₃], mit basischem Aluminiumphosphit [Al(OH)(H₂PO₃)₂*2aq], mit Aluminiumphosphittetrahydrat [Al₂(HPO₃)₃*4aq], mit Aluminiumphosphonat, mit Al₇(HPO₃)₉(OH)₆(1,6-Hexandiamin)_{1,5}*12H₂O, mit Al₂(HPO₃)₃*xAl₂O₃*nH₂O mit x = 1 - 2,27 und n = 1 - 50 und/oder mit Al₄H₆P₁₆O₁₈ umfasst.

Bevorzugt handelt es sich bei der Komponente E) um Kondensationsprodukte des Melamins und/oder um Umsetzungsprodukte von Melamin mit Polyphosphorsäure und/oder um Umsetzungsprodukte von Kondensationsprodukten des Melamins mit Polyphosphorsäure oder Gemische davon; um Melem, Melam, Melon, Dimelaminpyrophosphat, Melaminpolyphosphat, Melempolyphosphat, Melampolyphosphat, Melonpolyphosphat und/oder gemischte Polysalze davon; um stickstoffhaltige Phosphate der Formeln (NH₄)_{y} H_{3-y} PO₄ bzw. (NH₄ PO₃)_{z}, mit y gleich 1 bis 3 und z gleich 1 bis 10.000, handelt.

Bevorzugt handelt es sich bei der Komponente E) um Glasfasern, Glaskugeln und/oder mineralische Füllstoffe.

Bevorzugt handelt es sich bei Komponente G) um Phthalsäureanhydride, Pyromellithsäureanhydrid, Trimellitsäureanhydrid, mit Maleinsäureanhydrid gepfropfte Polyolefine; um Epoxyverbindungen, Epoxy-funktionelle Acrylate, Bisoxazoline, Carbodiimde, Diisocyanate und/oder Diurethane.

Bevorzugt handelt es sich bei den Phosphoniten (Komponente H) um solche der allgemeinen Struktur

R-[P(OR⁵)₂]ₘ (VI),

wobei
- R: ein ein- oder mehrwertiger aliphatischer, aromatischer oder hetero-aromatischer organischer Rest ist und
- R⁵: eine Verbindung der Struktur (VII) 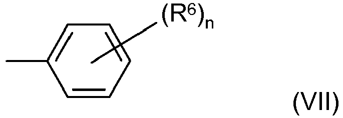
ist oder die beiden Reste R⁵ eine verbrückende Gruppe der Struktur (VIII) bilden 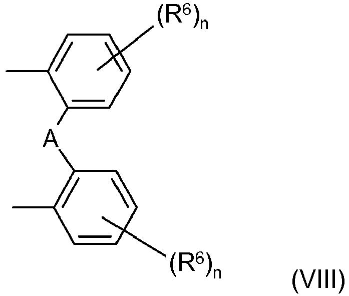 mit
- A: direkter Bindung, O, S, C₁₋₁₈-Alkylen (linear oder verzweigt), C₁₋₁₈-Alkyliden (linear oder verzweigt), in denen
- R⁶: unabhängig voneinander C₁₋₁₂-Alkyl (linear oder verzweigt), C₁₋₁₂-Alkoxy und/oder C₅₋₁₂-Cycloalkyl bedeuten und
- n: 0 bis 5 sowie
- m: 1 bis 4 bedeutet.

Bevorzugt handelt es sich bei der Komponente I) um Alkali-, Erdalkali-, Aluminium-und/oder Zinksalze von langkettigen Fettsäuren mit 14 bis 40 C-Atomen und/oder um Umsetzungsprodukte von langkettigen Fettsäuren mit 14 bis 40 C-Atomen mit mehrwertigen Alkoholen, wie Ethylenglykol, Glycerin, Trimethylolpropan und/oder Pentaerythrit.

Bevorzugt enthält die erfindungsgemäße flammwidrige Polyamidzusammensetzung nach mindestens einem der Ansprüche 1 bis 12

| | |
|---|---|
| 30 bis 79,9 | Gew.-% Komponente A), |
| 5 bis 20 | Gew.-% Komponente B), |
| 5 bis 20 | Gew.-% Komponente C), |
| 0 bis 20 | Gew.-% Komponente D), |
| 0 bis 20 | Gew.-% Komponente E), |
| 10 bis 40 | Gew.-% Komponente F) |
| 0 bis 20 | Gew.-% Komponente G), |
| 0 bis 2 | Gew.-% Komponente H) und |
| 0,1 bis 2 | Gew.-% Komponente I) enthält |

Besonders bevorzugt enthält die flammwidrige Polyamidzusammensetzung nach mindestens einem der Ansprüche 1 bis 12

| | |
|---|---|
| 30 bis 74,6 | Gew.-% Komponente A), |
| 5 bis 20 | Gew.-% Komponente B), |
| 5 bis 20 | Gew.-% Komponente C), |
| 0 bis 20 | Gew.-% Komponente D), |
| 0 bis 20 | Gew.-% Komponente E), |
| 15 bis 35 | Gew.-% Komponente F) |
| 0,3 bis 10 | Gew.-% Komponente G), |
| 0 bis 2 | Gew.-% Komponente H) und |
| 0,1 bis 2 | Gew.-% Komponente I). |

Insbesondere enthält die flammwidrige Polyamidzusammensetzung nach mindestens einem der Ansprüche 1 bis 12

| | |
|---|---|
| 30 bis 71,6 | Gew.-% Komponente A), |
| 5 bis 20 | Gew.-% Komponente B), |
| 5 bis 20 | Gew.-% Komponente C), |
| 3 bis 10 | Gew.-% Komponente D), |
| 0 bis 20 | Gew.-% Komponente E), |
| 15 bis 35 | Gew.-% Komponente F) |
| 0,3 bis 10 | Gew.-% Komponente G), |
| 0 bis 2 | Gew.-% Komponente H) und |
| 0,1 bis 2 | Gew.-% Komponente I). |

In einer weiteren Ausführungsform enthält die erfindungsgemäße flammwidrige Polyamidzusammensetzung nach mindestens einem der Ansprüche 1 bis 12

| | |
|---|---|
| 30 bis 71,6 | Gew.-% Komponente A), |
| 5 bis 20 | Gew.-% Komponente B), |
| 5 bis 20 | Gew.-% Komponente C), |
| 0 bis 10 | Gew.-% Komponente D), |
| 3 bis 10 | Gew.-% Komponente E), |
| 15 bis 35 | Gew.-% Komponente F) |
| 0,3 bis 10 | Gew.-% Komponente G), |
| 0 bis 2 | Gew.-% Komponente H) und |
| 0,1 bis 2 | Gew.-% Komponente I). |

Besonders ist auerdem ebenfalls eine flammwidrige Polyamidzusammensetzung nach mindestens einem der Ansprüche 1 bis 12, die

| | |
|---|---|
| 30 bis 71,4 | Gew.-% Komponente A), |
| 5 bis 20 | Gew.-% Komponente B), |
| 5 bis 20 | Gew.-% Komponente C), |
| 0,1 bis 10 | Gew.-% Komponente D), |
| 3 bis 10 | Gew.-% Komponente E), |
| 15 bis 35 | Gew.-% Komponente F) |
| 0,3 bis 10 | Gew.-% Komponente G), |
| 0,1 bis 2 | Gew.-% Komponente H) und |
| 0,1 bis 2 | Gew.-% Komponente I) enthält |

Bevorzugt enthält die flammwidrige Polyamidzusammensetzung weiterhin Telomere, wobei es sich bei den Telomeren um Ethylbutylphosphinsäure, Dibutylphosphinsäure, Ethylhexylphosphinsäure, Butylhexylphosphinsäure, Ethyloctylphosphinsäure, sec-Butylethylphosphinsäure, 1-Ethylbutyl-Butylphosphinsäure, Ethyl-1-Methylpentyl-phosphinsäure, Di-sec-Butylphosphinsäure (Di-1-Methyl-propylphosphinsäure), Propyl-Hexylphosphinsäure, Dihexylphosphinsäure, Hexyl-Nonylphosphinsäure, Dinonylphosphinsäure und/oder ihre Salze mit den Metallen von Mg, Ca, Al, Sb, Sn, Ge, Ti, Zn, Fe, Zr, Ce, Bi, Sr, Mn, Li, Na, K handelt und die Telomere verschieden von der Komponente A) sind.

Bevorzugt enthält die flammwidrige Polyamidzusammensetzung zusätzlich Zinkoxid, Zinkborat und/oder Zinkstannat.

Bevorzugt enthält die flammwidrige Polyamidzusammensetzung weitere Additive, wobei die weiteren Additive ausgewählt sind aus der Gruppe Antioxidantien, UV-Stabilisatoren, Gammastrahlen-stabilisatoren, Hydrolysestabilisatoren, Co-Stabilisatoren für Antioxidantien, Antistatika, Emulgatoren, Nukleierungsmitteln, Weichmachern, Verarbeitungshilfsmitteln, Schlagzähmodifikatoren, Farbstoffen, Pigmenten und/oder weiteren Flammschutzmitteln, die sich von Komponenten B), D), E), F), H) und I) unterscheiden .

Bevorzugt enthält die erfindungsgemäße flammwidrige Polyamidzusammensetzung als weitere Komponente Eisen in Form einer eisenhaltigen Substanz, wobei die Menge an eisenhaltiger Substanz 0,0001 bis 10 Gew.-% der Gesamtmischung beträgt.

Die Erfindung betrifft auch die Verwendung einer flammhemmenden Polyamidzusammensetzung nach einem oder mehreren der Ansprüche 1 bis 21 im Elektro- und Elektronikbereich, in oder für Steckverbinder, stromberührte Teile in Stromverteilern (FI-Schutz), Platinen, Vergussmassen, Stromsteckern, Schutzschaltern, Lampengehäuse (LED Gehäuse), Kondensatorgehäuse, Spulenkörper und Ventilatoren für Schutzkontakte, Stecker, in/auf Platinen, Gehäuse für Stecker, Kabel, flexible Leiterplatten, Ladekabel für Handys, Motorabdeckungen, Textilbeschichtungen und anderen Produkten.

Bevorzugt liegen bei den vorgenannten Verwendungen die Polyamide als Formkörper, Filme, Fäden, Folien und/oder Fasern vor.

Schließlich betrifft die Erfindung auch einen dreidimensionaler Artikel umfassend die flammwidrige Polyamidzusammensetzung nach einem oder mehreren der Ansprüche 1 bis 21, dadurch gekennzeichnet, dass es sich hierbei Formkörper, Spritzgussteile, Extrusionsmassen und/oder Extrusionsteile handelt.

Überraschenderweise wurde gefunden, dass erfindungsgemäße Kombinationen von Polyamiden mit weiteren Polymeren ungleich Polyamid, insbesondere Polyestern, sowie Salzen der Dialkylphosphinsäuren eine gute Flammschutzwirkung aufweisen kombiniert mit einer verbesserten Farbstabilität bei Wasserlagerung. Zudem wird eine hohe Oberflächengüte, gute Verarbeitbarkeit und hohe Langzeitstabilität erreicht. Zur Verbesserung der Verträglichkeit der beiden Polymerkomponenten können sogenannte Compatibilizer zugegeben werden.

Die DE-A-4221969 beschreibt Polyamid-Polyester-Blends mit verbesserter Phasenverträglichkeit, wobei 1 - 10 Masse-%, bezogen auf den Polyamidanteil, an cyclischem Carbonsäureanhydrid und 0,1 - 5 Masse% Diisocyanat oder Diurethan, bezogen auf den gesamten Polymeranteil, zugegeben werden.

Die WO-A-2013/030024 beschreibt flammwidrige Polyamid/Polyesterblends insbesondere mit rotem Phosphor als Flammschutzmittel. Bei Verwendung eines Impact Modifiers werden gute mechanische Werte, hoher CTI und GWIT erreicht. Hinweise auf Farbstabilität oder Wasseraufnahme finden sich nicht. Eine Epoxidgruppen enthaltene Komponente zur Verträglichkeitsvermittlung wird ausdrücklich ausgeschlossen, bei Verwendung einer solchen wird kein UL94 V-0 und kein GWIT erreicht.

Die WO-A-1997/023565 beschreibt die Verwendung von Melaminpyrophosphat als Flammschutzmittel in Polyamiden und Polyestern, u.a. auch für PA/PBT Blends. Mit 20 % Glasfasern und 32 % Melaminpyrophosphat wird UL94 V-0 bei 1,6 mm erreicht.

Die EP-A-0837100 beschreibt thermoplastische flammwidrige Harze mit rotem Phosphor und Polyethylenterephthalat sowie einem weiteren Thermoplasten ungleich Polyethylenterephthalat. Eine Kombination von PA 6 oder PA 66 mit PET erreicht UL94 V-0 und zeigt nur geringe Ausblühungen.

In der US-A-2001/007888 werden thermoplastische Harze bestehend aus einem aromatischen Polyester und einem Polyamid, einer Gummi-enthaltenden Polymerkomponente, einem Polyphenylenether und einem halogenfreien Flammschutzmittel beschrieben. In den Beispielen wird roter Phosphor oder ein Calciumhypophosphit als Flammschutzmittel verwendet. Die Gummi-enthaltende Polymerkomponente sowie der Polyphenylenether sind zwingend vorhanden um UL94 V-0 und gute mechanische Werte zu erzielen.

Ein weiterer Vorteil der erfindungsgemäße Kombinationen von Polyamiden mit weiteren Polymeren ungleich Polyamid, insbesondere Polyestern, sowie Salzen der Dialkylphosphinsäuren ist ihre allgemeine Einfärbbarkeit. Bei Verwendung von rotem Phosphor als Flammschutzmittel können dagegen nur dunkle bis sehr dunkle Farbtöne eingestellt werden.

Bevorzugt ist das Polyamid (PA) ausgewählt aus der Gruppe PA 6, PA 6,6, PA 4,6, PA 12, PA 6,10, PA 4,10, PA 10,10, PA 11, PA 6T/66, PA 6T/6, PA 4T, PA 9T, PA 10T, Polyamid-Copolymere, Polyamid-Blends sowie Kombinationen davon.

Bevorzugt handelt es sich bei Komponente A) um Polyamid 66 oder Copolymere oder Polymer Blends aus Polyamid 66 und Polyamid 6.

Bevorzugt bedeutet M Formel (I) Aluminium.

Bevorzugt handelt es sich bei Komponente C um thermoplastische Polyester ausgewählt aus der Gruppe der Polyalkylenterephthalate. Polyalkylenterephthalate im Sinne der Erfindung sind Reaktionsprodukte aus aromatischen Dicarbonsäuren oder ihren reaktionsfähigen Derivaten (z. B. Dimethylestern oder Anhydriden) und aliphatischen, cycloaliphatischen oder araliphatischen Diolen und Mischungen dieser Reaktionsprodukte.

Erfindungsgemäß bevorzugt einzusetzende Polyalkylenterephthalate lassen sich aus Terephthalsäure (oder ihren reaktionsfähigen Derivaten) und aliphatischen oder cycloaliphatischen Diolen mit 2 bis 10 C-Atomen nach bekannten Methoden herstellen (Kunststoff-Handbuch, Bd. VIII, S. 695-710, Karl-Hanser-Verlag, München 1973).

Erfindungsgemäß bevorzugt einzusetzende Polyalkylenterephthalate enthalten mindestens 80 Mol-%, vorzugsweise 90 Mol-%, bezogen auf die Dicarbonsäure, Terephthalsäurereste.

Die erfindungsgemäß bevorzugt einzusetzenden Polyalkylenterephthalate können neben Terephthalsäureresten bis zu 20 Mol-% Reste anderer aromatischer Dicarbonsäuren mit 8 bis 14 C-Atomen oder Reste aliphatischer Dicarbonsäuren mit 4 bis 12 C-Atomen enthalten, wie Reste von Phthalsäure, Isophthalsäure, Naphthalin-2,6-dicarbonsäure, 4,4'-Diphenyldicarbonsäure, Bernstein-, Adipin-, Sebacinsäure, Azelainsäure, Cyclohexandiessigsäure, Cyclohexandicarbonsäure.

Erfindungsgemäß bevorzugt einzusetzende Polyalkylenterephthalate sind auch Copolyester, die aus mindestens zwei der oben genannten Säurekomponenten und/oder aus mindestens zwei der obengenannten Alkoholkomponenten und/oder Butandiol-1,4 hergestellt werden. Besonders bevorzugte Copolyester sind Poly-(ethylenglykol/butandiol-1,4)-terephthalate.

Bevorzugt handelt es sich bei der Komponente E) um Kondensationsprodukte des Melamins wie Melem, Melam, Melon und/oder um Umsetzungsprodukte von Melamin mit Polyphosphorsäure und/oder um Umsetzungsprodukte von Kondensationsprodukten des Melamins mit Polyphosphorsäure oder Gemische davon.

Unter den Umsetzungsprodukten mit Phosphorsäure oder kondensierten Phosphorsäuren versteht man Verbindungen, die durch Umsetzung von Melamin oder den kondensierten Melaminverbindungen, wie Melam, Melem oder Melon etc., mit Phosphorsäure entstehen. Beispiele hierfür sind Dimelaminphosphat, Dimelaminpyrophosphat, Melaminphosphat, Melaminpyrophosphat, Melaminpolyphosphat, Melampolyphosphat, Melonpolyphosphat und Melempolyphosphat bzw. gemischte Polysalze, wie sie z. B. in der WO-A-98/39306 beschrieben sind.

Besonders bevorzugt handelt es sich bei der Komponente E um Melaminpolyphosphat.

Besonders bevorzugt handelt es sich bei dem verstärkenden Füll- oder Verstärkungsstoff (Komponente F) um Glasfasern. Darüber hinaus können bevorzugt Glaskugeln, Glasfasern mit Aspektverhältnissen oder mineralische Füllstoffe wie Talkum, Wollastonit oder Kreide verwendet werden.

Bevorzugt handelt es sich bei Komponente G) um Verbindungen, die mit Amino Endgruppen des Polyamids und/oder Säureendgruppen reagieren, wie Phtthalsäureanhydride, Pyromellithsäureanhydrid, Trimellitsäureanhydrid, mit Maleinsäure Anhydrid gepfropfte Polyolefine, Epoxyverbindungen, Epoxy-funktionelle Acrylate, Bisoxazoline oder Carbodiimde, Diisocyanate oder Diurethane.

Besonders bevorzugt werden Glycidylmethacrylat-Polyethylen Copolymere verwendet, die z.B. unter dem Handelsnamen Lotader^{®} AX von Arkema erhältlich sind.

Besonders bevorzugt werden Glycidylmethacrylat-Acrylat-Styrol Copolymere eingesetzt, wie sie unter dem Namen Joncryl^{®} ADR von BASF erhältlich sind.

Bevorzugt werden als Komponente H) Phosphite der Formel (IX)eingesetzt,

P(OR₁)₃ (IX)

wobei R₁ eine Verbindung der Struktur (VII) 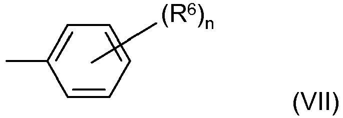 ist wobei R⁶ C₁₋₁₂-Alkyl (linear oder verzweigt), C₁₋₁₂-Alkoxy und/oder C₅₋₁₂-Cycloalkyl bedeutet

Bevorzugt handelt es sich bei der Komponente I) um Alkali-, Erdalkali-, Aluminium- und/oder Zinksalze von langkettigen Fettsäuren mit 14 bis 40 C-Atomen und/oder um Umsetzungsprodukte von langkettigen Fettsäuren mit 14 bis 40 C-Atomen mit mehrwertigen Alkoholen, wie Ethylenglykol, Glycerin, Trimethylolpropan und/oder Pentaerythrit.

Besonders bevorzugt handelt es sich bei dem Polymer um ein oder mehrere Polyamide, die mit Füll- und/oder Verstärkungsstoffen, ausgerüstet sein können.

Bevorzugt liegen die Polyamide als Formkörper, -Filme, -Fäden und/oder -Fasern vor.

Besonders bevorzugt handelt es sich bei Komponente D) um ein Umsetzungsprodukt aus Phosphoriger Säure und einer Aluminiumverbindung.

Bevorzugt sind Aluminiumphosphite mit den CAS-Nummern 15099-32-8, 119103-85-4, 220689-59-8, 56287-23-1, 156024-71-4, 71449-76-8 und 15099-32-8.

Geeignete Phosphinate sind in der PCT/WO97/39053 beschrieben, auf die ausdrücklich Bezug genommen wird.

Besonders bevorzugte Phosphinate sind Aluminium-, Calcium- und Zinkphosphinate.

Besonders bevorzugt wird in der Anwendung das gleiche Salz der Phosphinsäure wie der phosphorigen Säure verwendet, also z. B. Aluminiumdialkylphosphinat zusammen mit Aluminiumphosphit oder Zinkdialkylphosphinat zusammen mit Zinkphosphit.

Der erfindungsgemäßen Kombination aus den Komponenten A) und B) und C) sowie ggf. D), E), F), G), H) und I) können weitere Additive zugesetzt werden, wie z. B. Antioxidantien, UV-Absorber und Lichtschutzmittel, Metalldesaktivatoren, peroxidzerstörende Verbindungen, Polyamidstabilisatoren, basische Co-Stabilisatoren, Nukleierungsmittel, Füllstoffe und Verstärkungsmittel, weitere Flammschutzmittel sowie sonstige Zusätze.

Geeignete Antioxidantien sind beispielsweise alkylierte Monophenole, z. B. 2,6-Di-tert-butyl-4-methylphenol; 1.2 Alkylthiomethylphenole, z. B. 2,4-Di-octylthiomethyl-6-tert-butylphenol; Hydrochinone und alkylierte Hydrochinone, z. B. 2,6-Di-tert-butyl-4-methoxyphenol; Tocopherole, z. B. α -Tocopherol, β-Tocopherol, γ-Tocopherol, δ-Tocopherol und Mischungen davon (Vitamin E); Hydroxylierte Thiodiphenylether, z. B. 2,2'-Thio-bis(6-tert-butyl-4-methylphenol), 2,2'-Thio-bis(4-octylphenol), 4,4'-Thio-bis-(6-tert-butyl-3-methylphenol), 4,4'-Thio-bis-(6-tert-butyl-2-methylphenol), 4,4'-Thio-bis-(3,6-di-sec.-amylphenol), 4,4'-Bis-(2,6-di-methyl-4-hydroxyphenyl)-disulfic; Alkyliden-Bisphenole, z. B. 2,2'-Methylen-bis-(6-tert-butyl-4-methylphenol; O-, N- und S-Benzylverbindungen, z. B. 3,5,3',5'-Tetra-tert-butyl-4,4'-dihydroxydi-benzylether; Hydroxybenzylierte Malonate, z. B. Dioctadecyl-2,2-bis-(3,5-di-tert-butyl-2-hydrorybenzyl)-malonat; Hydroxybenzyl-Aromaten, z. B. 1,3,5-Tris-(3,5-di-tert-buty)-4-hydroxybenzyl)-2,4,6-trimethylbenzo1, 1,4-Bis-(3,5-di-tert-butyl-4-hydroxybenzyl)-2,3,5,6-tetramethylbenzot 2,4,6-Tris-(3,5-di-tert-buryl-4-hydroxybenzyl)-phenol; Triazinverbindungen, z. B. 2,4-Bis-octylmercapto-6(3,5-di-tert-butyl-4-hydroxyanilino)-1,3,5-triazin; Benzylphosphonate, z. B. Dimethyl-2,5-di-tert-butyl-4-hydroxybenzylphosphonat; Acylaminophenole, 4-Hydroxylaurinsäureamid, 4-Hydroxystearinsäureanilid, N-(3,5-di-tert-butyl-4-hydroxyphenyl)-carbaminsäureoctylester; Ester der β-(3.5-Di-tert-butyl-4-hydroxyphenyl)-propionsäure mit ein- oder mehr-wertigen Alkoholen; Ester der β-(5-tert-Butyl-4-hydroxy-3-methylphenyl)-propionsäure mit ein- oder mehrwertigen Alkoholen; Ester der β-(3,5-Dicyclohexyl-4-hydroxyphenyl)-propionsäure mit ein- oder mehr-wertigen Alkoholen; Ester der 3,5-Di-tert-butyl-4-hydroxyphenylessigsäure mit ein- oder mehrwertigen Alkoholen; Amide der β-(3,5-Di-tert-butyl-4-hydroxyphenyl)-propionsäure, wie z. B. N,N'-Bis-(3,5-di-tert-butyl4-hydroxyphenylpropionyl)-hexamethylendiamin, N,N'-Bis-(3,5-di-tert-butyl-4-hydroxyphenylpropionyl)-trimethylendiamin, N,N'-Bis-(3,5-di-tert-butyl-4-hydroxyphenylpropionyl)-hydrazin.

Geeignete UV-Absorber und Lichtschutzmittel sind beispielsweise 2-(2'-Hydroxyphenyl)-benzotriazole, wie z. B. 2-(2'-Hydroxy-5'-methylphenyl)-benzotriazol; 2-Hydroxybenzophenone, wie z. B. das 4-Hydroxy, 4-Methoxy, 4-Octoxy, 4-Decyloxy-, 4-Dodecyloxy-, 4-Benzyloxy-, 4,2',4-Trihydroxy-, 2'-Hydroxy-4,4'-dimethoxy-Derivat;
Ester von gegebenenfalls substituierten Benzoesäuren, wie z. B. 4-tert-Butylphenylsalicylat, Phenylsalicylat, Octylphenyl-salicylat, Dibenzoylresorcin, Bis-(4-tert-butylbenzoyl)-resorcin, Benzoylresorcin, 3,5-Di-tert-butyl-4-hydroxybenzoesäure-2,4-di-tert-butylphenylester, 3,5-Di-tert-butyl-4-hydroxybenzoesäurehexadecylester, 3,5-Di-tert-butyl-4-hydroxybenzoesäure-octadecylester, 3,5-Di-tert-butyl-4-hydroxybenzoe-säure-2-methyl-4,6-di-tert-butylphenylester; Acrylate, wie z. B. α-Cyan-β,β-diphenylacrylsäure-ethylester bzw. -isooctylester, α-Carbomethoxy-zimtsäuremethylester, α-Cyano-β-methyl-p-methoxy-zimtsäuremethyl-ester bzw. -butylester, α-Carbomethoxy-p-methoxy-zimtsäuremethylester, N-(β-Carbo-methoxy-β-cyanovinyl)-2-methyl-indolin.

Weiterhin Nickelverbindungen, wie z. B. Nickelkomplexe des 2,2'-Thio-bis-[4(1,1,3,3-tetramethylbutyl)phenols], wie der 1:1- oder der 1:2-Komplex, gegebenenfalls mit zusätzlichen Liganden, wie n-Butylamin, Triethanolamin oder N-Cyclohexyl-diethanolamin, Nickeldibutyldithiocarbamat, Nickelsalze von 4-Hydroxy-3,5-di-tert-butylbenzylphosphonsäure-monoalkylestern, wie vom Methyl- oder Ethylester, Nickelkomplexe von Ketoximen, wie von 2-Hydroxy-4-methyl-phenyl-undecylketoxim, Nickelkomplexe des 1-Phenyl-4-lauroyl-5-hydroxy-pyrazols, gegebenenfalls mit zusätzlichen Liganden; Sterisch gehinderte Amine, wie z. B. Bis-(2,2,6,6-tetramethyl-piperidyl)-sebacat; Oxalsäurediamide, wie z. B. 4,4'-Di-octyloxy-oxanilid; 2-(2-Hydroxyphenyl)-1,3,5-triazine, wie z. B. 2,4,6-Tris(2-hydroxy-4-octyloxyphenyl)-1,3,5-triazin.

Geeignete Metalldesaktivatoren sind z. B. N,N' -Diphenyloxalsäurediamid, N-Salicylal-N'-salicyloylhydrazin, N,N'-Bis-(salicyloyl)-hydrazin, N,N'-Bis-(3,5-di-tert-butyl-4-hydroxyphenylpropionyl)-hydrazin, 3-Salicyloylamino- 1,2,4-triazol, Bis-(benzyliden)-oxalsäuredihydrazid, Oxanilid, Isophthalsäure-dihydrazid, Sebacinsäure-bis-phenylhydrazid, N,N'-Diacetyl-adipinsäure-dihydrazid, N,N'-Bis-salicyloyl-oxalsäure-dihydrazid, N,N'-Bis-salicyloyl-thiopropionsäure-dihydrazid.

Geeignete peroxidzerstörende Verbindungen sind z. B. Ester der β-Thiodipropionsäure, beispielsweise der Lauryl-, Stearyl-, Myristyl- oder Tridecylester, Mercaptobenzimidazol, das Zinksalz des 2-Mercaptobenzimidazols, Zink-dibutyl-dithiocarbamat, Dioctadecyldisulfid, Pentaerythrit-tetrakis-(ß-dodecylmercapto)-propionat.

Geeignete Polyamidstabilisatoren sind z. B. Kupfersalze in Kombination mit Jodiden und/oder Phosphorverbindungen und Salze des zweiwertigen Mangans.

Geeignete basische Co-Stabilisatoren sind Melamin, Polyvinylpyrrolidon, Dicyandiamid, Triallylcyanurat, Harnstoff-Derivate, Hydrazin-Derivate, Amine, Polyamide, Polyurethane, Alkali- und Erdalkalisalze höherer Fettsäuren, beispielsweise Ca-Stearat, Zn-Stearat, Mg-Behenat, Mg-Stearat, Na-Ricinoleat, K-Palmitat, Antimonbrenzcatechinat oder Zinnbrenzcatechinat.

Geeignete Nukleierungsmittel sind z. B. 4-tert-Butylbenzoesäure, Adipinsäure und Diphenylessigsäure.

Zu den Füllstoffen und Verstärkungsmitteln gehören z. B. Calciumcarbonat, Silikate, Glasfasern, Asbest, Talk, Kaolin, Glimmer, Bariumsulfat, Metalloxide und -hydroxide, Russ, Graphit und andere.

Als weitere Flammschutzmittel sind z. B. Arylphosphate, Phosphonate, Phosphazene, Salze der hypophosphorigen Säure sowie roter Phosphor geeignet.

Als weitere Flammschutzmittel sind ebenfalls Salze aliphatischer und aromatischer Sulfonsäuren und mineralische Flammschutzadditive wie Aluminium- und/oder Magnesiumhydroxid, Ca-Mg-Carbonat-Hydrate geeignet. In Frage kommen ferner Flammschutzmittelsynergisten aus der Gruppe der Sauerstoff- Stickstoff- oder schwefelhaltigen Metallverbindung, bevorzugt Zinkoxid, Zinkborat, Zinkstannat, Zinkhydroxystannat, Zinksulfid, Molybdänoxid, Titandioxid, Magnesiumoxid, Magnesiumcarbonat, Calciumcarbonat, Calciumoxid, Titannitrid, Bornitrid, Magnesiumnitrid, Zinknitrid, Zinkphosphat, Calciumphosphat, Calciumborat, Magnesiumborat oder deren Mischungen sowie ferner Kohlebildner, etwa Phenol-Formaldehydharze, Polycarbonate, Polyimide, Polysulfone, Polyethersulfone oder Polyetherketone sowie Antitropfmittel, insbesondere Tetrafluorethylenpolymerisate.

Zu den sonstigen Zusätzen zählt man z. B. Weichmacher, Blähgraphit, Gleitmittel, Emulgatoren, Pigmente, optische Aufheller, Flammschutzmittel, Antistatika, Treibmittel.

Diese zusätzlichen Additive können vor, zusammen mit oder nach Zugabe der Flammschutzmittel den Polymeren zugegeben werden. Die Dosierung sowohl dieser Additive wie auch die der Flammschutzmittel kann dabei als Feststoff, in Lösung oder Schmelze sowie auch in Form von festen oder flüssigen Mischungen oder als Masterbatches/Konzentrate erfolgen.

Geeignet als Komponente I) sind Ester oder Salze von langkettigen aliphatischen Carbonsäuren (Fettsäuren), die typischerweise Kettenlängen von C₁₄ bis C₄₀ aufweisen. Bei den Estern handelt es sich um Umsetzungsprodukte der genannten Carbonsäuren mit gebräuchlichen mehrwertigen Alkoholen, wie z. B. Ethylenglykol, Glycerin, Trimethylolpropan oder Pentaerythrit. Als Salze der genannten Carbonsäuren kommen vor allem Alkali- oder Erdalkalisalze bzw. Aluminium- und Zinksalze in Betracht.

Bevorzugt handelt es sich bei der Komponente I) um Ester oder Salze der Stearinsäure wie z. B. Glycerinmonostearat oder Calciumstearat.

Bevorzugt handelt es sich bei der Komponente I) um Umsetzungsprodukte von Montanwachssäuren mit Ethylenglykol.

Bevorzugt handelt es sich bei den Umsetzungsprodukten um eine Mischung aus Ethylenglykol-Mono-Montanwachssäureester, Ethylenglykoldimontanwachssäureester, Montanwachssäuren und Ethylenglykol.

Bevorzugt handelt es sich bei der Komponente I) um Umsetzungsprodukte von Montanwachssäuren mit einem Calciumsalz.

Besonders bevorzugt handelt es sich bei den Umsetzungsprodukten um eine Mischung aus 1,3-Budandiol-Mono-Montanwachssäureester, 1,3-Budandiol-Di-Montanwachssäureester, Montanwachssäuren, 1,3-Butandiol, Calciummontanat und dem Calciumsalz.

Wie zuvor ausgeführt, kann die erfindungsgemäße flammwidrige Polyamidzusammensetzung als weitere Komponente Eisen in Form einer eisenhaltigen Substanz, wobei die Menge an eisenhaltiger Substanz 0,0001 bis 10 Gew.-% der Gesamtmischung beträgt, enthalten.

Das Eisen kann dabei isostrukturell in einem Aluminiumphosphinat nach Formel (I) eingebaut sein oder als nicht ionisch eingebautes Eisensalz vorliegen, also als eine eigene chemische Spezies vorliegen.

Geeignet sind Eisen(II)salze und/oder Eisen(III)salze mit anorganischen Anionen der siebten Hauptgruppe (Halogenide) wie z. B. Fluoride, Chloride, Bromide, lodide; mit Anionen der Oxosäuren der siebten Hauptgruppe (Hypohalogenite, Halogenite, Halogenate, z. B. Iodat, Perhalogenate, z. B. Perchlorat); mit Anionen der sechsten Hauptgruppe (Chalgogenide) wie z. B. Oxide, Hydroxide, Peroxide, Superoxide; mit Anionen der Oxosäuren der sechsten Hauptgruppe (Sulfate, Hydrogensulfate, Sulfathydrate, Sulfite, Peroxosulfate); mit Anionen der fünften Hauptgruppe (Pnicogenide) wie z. B. Nitride, Phosphide; mit Anionen der Oxosäuren der fünften Hauptgruppe (Nitrat, Nitrathydrate, Nitrite, Phosphate, Peroxophosphate, Phosphite, Hypophosphite, Pyrophosphate); mit Anionen der Oxosäuren der vierten Hauptgruppe (Carbonate, Hydrogencarbonate, Hydroxidcarbonate, Carbonathydrate, Silicate, Hexafluorosilicate, Hexafluorosilicathydrate, Stannate); mit Anionen der Oxosäuren der dritten Hauptgruppe (Borate, Polyborate, Peroxoborate); mit Anionen der Pseudohalogenide (Thiocyanate, Cyanate, Cyanide); mit Anionen der Oxosäuren der Übergangsmetalle (Chromate, Chromite, Molybdate, Permanganat).

Geeignet sind auch Eisen(II)salze und/oder Eisen(III)salze mit organischen Anionen aus der Gruppe der Mono-, Di-, Oligo , Polycarbonsäuren (Salze der Ameisensäure (Formiate)), der Essigsäure (Acetate, Acetathydrate), der Trifluoressigsäure (Trifluoracetathydrate), Propionate, Butyrate, Valerate, Caprylate, Oleate, Stearate, der Oxalsäure (Oxalate), der Weinsäure (Tartrate), Citronensäure (Citrate, basische Citrate, Citrathydrate), Benzoesäure (Benzoate), Salicylate, Milchsäure (Lactat, Lactathydrate), Acrylsäure, Maleinsäure, Bernsteinsäure, von Aminosäuren (Glyzin), von sauren Hydroxofunktionen (Phenolate etc), Para-Phenolsulfonate, Para-Phenolsulfonathydrate, Acetylacetonathydrate, Tannate, Dimethyldithiocarbamate, Trifluormethansulfonat, Alkylsulfonate und/oder Aralkylsulfonate.
Bevorzugt sind Eisen(II)- und/oder Eisen(III)-borate, -sulfate, -sulfathydrate, -hydroxosulfathydrate, gemischte -hydroxosulfathydrate, -oxysulfate, -acetate, -nitrate, -fluoride, -fluoridhydrate, -chloride, chloridhydrate, -oxychloride, -bromide, -iodide, -iodidhydrate und/oder -carbonsäurederivate; Eisen(II)- und/oder Eisen(III)-acetate, -chloride, -nitrate, -sulfate, -phosphinate, -monoalkylphosphinate, und/oder alkylphosphonate.

Insbesonders bevorzugte Eisensalze sind Eisen(II)monoalkylphosphinate, hierzu gehören Eisen(II)(ethylphosphinat), Eisen(II)(propylphosphinat), Eisen(II)(butylphosphinat, Eisen(II)(n-butylphosphinat), Eisen(II)(sec-butylphosphinat), Eisen(II)(hexylphosphinat) und/oder Eisen(II)(octylphosphinat).

Bevorzugte Eisensalze sind Eisen(III)monoalkylphosphinate, zu denen Eisen(III)(ethylphosphinat), Eisen(III)(propylphosphinat), Eisen(III)(butylphosphinat), Eisen(III)(n-butylphosphinat, Eisen(III)(sec-butylphosphinat), Eisen(III)(hexylphosphinat), Eisen(III)(hexylphosphinat) und/oder Eisen(III)(octylphosphinat) gehören.

Bevorzugte Eisensalze sind Eisen(ll)alkylphosphonate, zu denen Eisen(II)(ethylphosphonat), Eisen(II)(propylphosphonat), Eisen(II)(butylphosphonat), Eisen(II)(n-butylphosphonat), Eisen(II)(sec-butylphosphonat), Eisen(II)(hexylphosphonat) und/oder Eisen(II)(octylphosphonat) gehören.

Bevorzugte Eisensalze sind Eisen(III)alkylphosphonate, zu denen Eisen(III)(ethylphosphonat), Eisen(III)(propylphosphonat), Eisen(III)(butylphosphonat), Eisen(III)(n-butylphosphonat), Eisen(III)(sec-butylphosphonat), Eisen(III)(hexylphosphonat) und/oder Eisen(III)(octylphosphonat) gehören.

Bevorzugte cogefällte Eisensalze sind Eisen(II)dialkylphosphinate, zu denen Eisen(II)bis(diethylphosphinat), Eisen(II)bis(dipropylphosphinat), Eisen(II)bis(butylethylphosphinat), Eisen(II)bis(n-butylethylphosphinat), Eisen(II)bis(sec-butylethylphosphinat), Eisen(II)bis(hexylethylphosphinat), Eisen(II)bis(dibutylphosphinat), Eisen(II)bis(hexylbutylphosphinat) und/oder Eisen(II)bis(octylethylphosphinat) gehören.

Bevorzugte Eisensalze sind Eisen(III)dialkylphosphinate, zu denen Eisen(III)tris(diethylphosphinat), Eisen(III)tris(dipropylphosphinat), Eisen(III)tris(butylethylphosphinat), Eisen(III)tris(n-butylethylphosphinat), Eisen(III)tris(sec-butylethylphosphinat), Eisen(III)tris(hexylethylphosphinat), Eisen(III)tris(dibutylphosphinat), Eisen(III)tris(hexylbutylphosphinat) und/oder Eisen(III)tris(octylethylphosphinat) gehören.

Die Mengenverhältnisse der Komponenten A), B) und C) und gegebenenfalls D), E), F), G), H) und I) in der Polyamid Formmasse hängen wesentlich vom vorgesehenen Anwendungsgebiet ab und können in weiten Grenzen variieren.

Die vorgenannten Additive können in den verschiedensten Verfahrensschritten in den Kunststoff eingebracht werden. So ist es bei Polyamiden möglich, bereits zu Beginn oder am Ende der Polymerisation/Polykondensation oder in einem folgenden Compoundierprozess die Additive in die Polymerschmelze einzumischen. Weiterhin gibt es Verarbeitungsprozesse bei denen die Additive erst später zugefügt werden. Dies wird insbesondere beim Einsatz von Pigment-oder Additivmasterbatches praktiziert. Außerdem besteht die Möglichkeit, insbesondere pulverförmige Additive auf das durch den Trocknungsprozess eventuell warme Polymergranulat aufzutrommeln.

Bevorzugt handelt es sich bei den Polyamiden um solche, die sich von Diaminen und Dicarbonsäuren und/oder von Aminocarbonsäuren oder den entsprechenden Lactamen ableiten, wie Polyamid 2/12, Polyamid 4 (Poly-4-aminobuttersäure, Nylon^{®} 4, Fa. DuPont), Polyamid 4/6 (Poly(tetramethylen-adipamid), Poly-(tetramethylen-adipinsäurediamid), Nylon^{®} 4/6, Fa. DuPont), Polyamid 6 (Polycaprolactam, Poly-6-aminohexansäure, Nylon^{®} 6, Fa. DuPont, Akulon^{®} K122, Fa. DSM; Zytel^{®} 7301, Fa. DuPont; Durethan^{®} B 29, Fa. Bayer), Polyamid 6/6 ((Poly(N,N'-hexamethyleneadipinediamid), Nylon^{®} 6/6 , Fa. DuPont , Zytel^{®} 101, Fa. DuPont; Durethan^{®} A30, Durethan^{®} AKV, Durethan^{®} AM, Fa. Bayer; Ultramid ^{®}A3, Fa BASF), Polyamid 6/9 (Poly(hexamethylen nonanediamid), Nylon^{®} 6/9, Fa. DuPont), Polyamid 6/10 (Poly(hexamethylen sebacamid), Nylon^{®} 6/10, Fa. DuPont), Polyamid 6/12 (Poly(hexamethylene dodecanediamid), Nylon^{®} 6/12, Fa. DuPont), Polyamid 6/66 (Poly(hexamethylene adipamide-co-caprolactam), Nylon^{®} 6/66 , Fa. DuPont), Polyamid 7 (Poly-7-aminoheptansäure, Nylon^{®} 7, Fa. DuPont), Polyamid 7,7 (Polyheptamethylenpimelamid, Nylon^{®} 7,7, Fa. DuPont), Polyamid 8 (Poly-8-aminooctansäure, Nylon^{®} 8, Fa. DuPont), Polyamid 8,8 (Polyoctamethylensuberamid, Nylon^{®} 8,8, Fa. DuPont), Polyamid 9 (Poly-9-aminononansäure, Nylon^{®} 9, Fa. DuPont), Polyamid 9,9 (Polynonamethylenazelamid, Nylon^{®} 9,9, Fa. DuPont), Polyamid 10 (Poly-10-amino-decansäure, Nylon^{®} 10, Fa. DuPont), Polyamid 10,9 (Poly(decamethylenazelamid), Nylon^{®} 10,9, Fa. DuPont), Polyamid 10,10 (Polydecamethylensebacamid, Nylon^{®} 10,10, Fa. DuPont), Polyamid 11 (Poly-11-aminoundecansäure, Nylon^{®} 11, Fa. DuPont), Polyamid 12 (Polylauryllactam, Nylon^{®} 12, Fa. DuPont, Grillamid^{®} L20, Fa. Ems Chemie), aromatische Polyamide ausgehend von m-Xylol, Diamin und Adipinsäure; Polyamide, hergestellt aus Hexamethylendiamin und Iso- und/oder Terephthalsäure (Polyhexamethylenisophthalamid Polyhexamethylenterephthalamid) und gegebenenfalls einem Elastomer als Modifikator, z. B. Poly-2,4,4-trimethylhexamethylenterephthalamid oder Poly-m-phenylenisophthalamid. Blockcopolymere der vorstehend genannten Polyamide mit Polyolefinen, Olefin-Copolymeren, lonomeren oder chemisch gebundenen oder gepfropften Elastomeren; oder mit Polyethern, wie z. B. mit Polyethylenglykol, Polypropylenglykol oder Polytetramethylenglykol. Ferner mit EPDM oder ABS modifizierte Polyamide oder Copolyamide; sowie während der Verarbeitung kondensierte Polyamide ("RIM-Polyamidsysteme").

Bevorzugt handelt es sich bei den weiteren Polymeren (Komponente C)) um Polyester, die sich von Dicarbonsäuren und Dialkoholen und/oder von Hydroxycarbonsäuren oder den entsprechenden Lactonen ableiten, wie Polyethylenterephthalat, Polybutylenterephthalat (Celanex^{®} 2500, Celanex 2002, Fa Celanese; Ultradur^{®}, Fa. BASF), Poly-1,4-dimethylolcyclohexanterephthalat, Polyhydroxybenzoate, sowie Block-Polyetherester, die sich von Polyethern mit Hydroxylendgruppen ableiten; ferner mit Polycarbonaten oder MBS modifizierte Polyester. Bevorzugt handelt es sich um Polyester Elastomere, die z.B. aus 1,4-Butandiol, Terephthalsäure und Polytetrahydrofuran (wird auch als Poly(tetramethylenether)glycol bezeichnet) hergestellt werden und harte kristalline Tetramethylenglycolterephthalat-Blöcke und weiche, amorphe Polyalkylenetherterephthal-Blöcke aufweisen. Die Herstellung erfolgt in der Schmelze durch Umesterungsreaktionen. Handelsnamen sind Hytrel^{®}, Arnitel^{®}, Riteflex^{®} u.a.

Die Erfindung betrifft schließlich auch ein Verfahren zur Herstellung von flammgeschützten Polymer-Formkörpern, dadurch gekennzeichnet, dass erfindungsgemäße flammgeschützte Polymer-Formmassen durch Spritzgießen (z. B. Spritzgießmaschine Typ Aarburg Allrounder) und Pressen, Schaumspritzgießen, Gasinnendruck-Spritzgießen, Blasformen, Foliengießen, Kalandern, Laminieren oder Beschichten bei höheren Temperaturen zum flammgeschützten Polymer-Formkörper verarbeitet wird.

Bevorzugt handelt es sich bei den Polyamiden um solche vom Aminosäure-Typ und/oder vom Diamin-Dicarbonsäure-Typ.

Bevorzugte Polyamide sind Polyamid 6 und/oder Polyamid 66 und Polyphthalamide.

Bevorzugt sind die Polyamide unverändert, gefärbt, gefüllt, ungefüllt, verstärkt, unverstärkt oder auch anders modifiziert.

### Beispiele

### 1. Eingesetzte Komponenten

### Handelsübliche Polymere (Granulate):

Polyamide (Komponente A):
   Polyamid 6.6 (PA 6.6-GV): Ultramid^{®} A27 (Fa. BASF AG, D)
Weiteres Polymere (Komponente C):
   Polyesterelastomer (TPE-E): Hytrel^{®} 4056 (Fa. DuPont, USA)
   Polyethylenterephthalat: Polyclear^{®}1101 (Fa. Invista, D)
   Polybutylenterephthalat: Ultradur^{®} B4500 (Fa. BASF, D)
   Polystyrol: Styrolution PS 454 N natural (Fa. Ineos, D)
   ABS: Novodur P2-H (Fa. Styrolution, D)
   Polyglykol: Polyglykol 8000 P (Fa. Clariant, D)
   Polycarbonat: Makrolon 3208 (Fa. Covestro, D)
   Polycaprolactone: PC Resin 2-2 (Fa. Changxing, China)
Komponente F: Glasfasern PPG HP 3610 EC 10 4,5 mm (Fa. PPG Ind. Fiber Glass, NL)
Flammschutzmittel (Komponente B):
   Aluminiumsalz der Diethylphosphinsäure, im Folgenden als DEPAL bezeichnet

### Weitere Flammschutzmittel:

Komponente D: Aluminiumsalz der Phosphorigen Säure, im Folgenden als PHOPAL bezeichnet
   Komponente E: Melaminpolyphosphat (Melapur^{®} 200/70, (Fa. BASF, D), als MPP bezeichnet
Compatibilizer (Komponente G):
   Zemac^{®} E60, Polyethylen mit Maleinsäureanhydrid (Vertellus, USA)
   Nexamite^{®} A56 (Nexam Chemicals, S)
   Nexamite^{®} A99 (Nexam Chemicals, S)
   Licocene^{®} PE MA 4351 (Clariant, D)
   Lotader^{®} AX 8700 (Arkema, F)
   Trimellitsäureanhydrid
Phosphonite (Komponente H): Sandostab^{®} P-EPQ, Fa. Clariant GmbH, D Wachskomponenten (Komponente F)):
   Licowax^{®} E, Fa. Clariant Produkte (Deutschland) GmbH, D (Ester der Montanwachssäure), Komponente I)

### 2. Herstellung, Verarbeitung und Prüfung von flammhemmenden Kunststoff-Formmassen

Die Flammschutzmittelkomponenten wurden in dem in der Tabelle angegebenen Verhältnis mit dem Phosphonit, den Gleitmitteln und Stabilisatoren vermischt und über den Seiteneinzug eines Doppelschnecken-Extruders (Typ Leistritz ZSE 27/44D) bei Temperaturen von 260 bis 310 °C in PA 6.6 bzw. bei 300 - 340 °C in PPA eingearbeitet. Die Glasfasern wurden über einen zweiten Seiteneinzug zugegeben. Der homogenisierte Polymerstrang wurde abgezogen, im Wasserbad gekühlt und anschließend granuliert.

Nach ausreichender Trocknung wurden die Formmassen auf einer Spritzgießmaschine (Typ Arburg 320 C Allrounder) bei Massetemperaturen von 250 bis 340 °C zu Prüfkörpern verarbeitet und anhand des UL 94-Tests (Underwriter Laboratories) auf Flammwidrigkeit geprüft und klassifiziert.

Nach UL 94 ergeben sich folgende Brandklassen:
- V-0: kein Nachbrennen länger als 10 sec., Summe der Nachbrennzeiten bei 10 Beflammungen nicht größer als 50 sec., kein brennendes Abtropfen, kein vollständiges Abbrennen der Probe, kein Nachglühen der Proben länger als 30 sec. nach Beflammungsende
- V-1: kein Nachbrennen länger als 30 sec. nach Beflammungsende, Summe der Nachbrennzeiten bei 10 Beflammungen nicht größer als 250 sec., kein Nachglühen der Proben länger als 60 sec. nach Beflammungsende, übrige Kriterien wie bei V-0
- V-2: Zündung der Watte durch brennendes Abtropfen, übrige Kriterien wie bei V-1
nicht klassifizierbar (nkl) erfüllt nicht die Brandklasse V-2.

Die Fließfähigkeit der Formmassen wurde durch Ermittlung des Schmelzvolumenindex (MVR) bei 275 °C/2,16 kg bestimmt. Ein starker Anstieg des MVR-Wertes deutet auf einen Polymerabbau hin. Füllstoffe haben auch einen Einfluss auf den MVR.

Zugfestigkeit (N/mm²), Reißdehnung und Reißfestigkeit wurden nach DIN EN ISO 527 gemessen (%), Schlagzähigkeit [kJ/m²] und Kerbschlagzähigkeit [kJ/m²] wurden nach DIN EN ISO 179 gemessen.

Die Farbänderung nach Wasserlagerung wurde bestimmt, indem Platten in 1 und 3 mm Stärke zur Hälfte in Wasser für sieben Tage gelagert wurden. Anschließend wurde die Farbe (Lab Werte) nach DIN 6174 mit einem Spectrophotometer CM-3600d mit Weiß- und Schwarzstandard sowie Messblenden gemessen und die Ergebnisse mit SpectraMagic NX-Software ausgewertet (Fa. Minolta Europe GmbH, D).

Sämtliche Versuche der jeweiligen Serie wurden, falls keine anderen Angaben gemacht wurden, aufgrund der Vergleichbarkeit unter identischen Bedingungen (Temperaturprogramme, Schneckengeometrien, Spritzgießparameter, etc.), durchgeführt.

Alle Mengen sind als Gew.-% angegeben und beziehen sich auf die Kunststoff-Formmasse einschließlich der Flammschutzmittel-Kombination und Zusatzstoffen.

Die Tabelle 1 zeigt Polyamidformmassen, die Komponente A) und Komponente B) als Flammschutzmischung enthalten. Diese zeigen eine deutlich messbare Korrosion. Alle Mengen sind als Gew.-% angegeben und beziehen sich auf die Kunststoff-Formmasse einschließlich der Flammschutzmittel-Kombination und Zusatzstoffen.

**Tabelle 1: PA 66 GF30 V-0 mit Phosphinaten. V1 und V2 sind Vergleichsbeispiele ohne PET Zusatz, B1 und B2 erfindungsgemäße Beispiele**

| Beispiel | V1 | B1 | V2 | B2 |
|---|---|---|---|---|
| Polyamid 66 | 47,6 | 37,6 | 47,6 | 37,6 |
| Glasfaser | 30 | 30 | 30 | 30 |
| Depal | 13,3 | 13,3 | 16,4 | 16,4 |
| MPP | 6,7 | 6,7 | | |
| Zinkborat | 1 | 1 | | |
| Phopal | | | 3,6 | 3,6 |
| Polyethylenterephthalat | | 10 | | 10 |
| Russ Masterbatch 30% in PA 6 | 2 | 2 | 2 | 2 |
| Licowax E | 0,3 | 0,3 | 0,3 | 0,3 |
| PEP-Q | 0,1 | 0,1 | 0,1 | 0,1 |
| | | | | |
| Beispiel | V1 | B1 | V2 | B2 |
| Farbe vor Wasserlagerung | schwarz | schwarz | schwarz | schwarz |
| L Wert | 26,9 | 26,5 | 25,7 | 26,4 |
| Farbe nach Wasserlagerung | grau | schwarz | grau | schwarz |
| L Wert | 33,3 | 27,2 | 34,2 | 27,2 |
| Delta Eab(D65) nach 7 Tagen in Wasser | 6,3 | 0,2 | 8,5 | 0,8 |
| UL 94 0,4 mm | V-0 | V-0 | V-0 | V-0 |
| UL 94 0,8 mm | V-0 | V-0 | V-0 | V-0 |
| UL 94 1,6 mm | V-0 | V-0 | V-0 | V-0 |
| E Modulus / N/mm² | 10901,55 | 11280,25 | 10858,91 | 11358,64 |
| Zugfestigkeit / N/mm² | 143,02 | 133,72 | 144,11 | 138,33 |
| Bruchdehnung / % | 2,53 | 2,16 | 3,09 | 2,21 |

Die Vergleichsbeispiele V1 und V2 zeigen, dass es bei flammwidrigen Polyamid 66 GF30 Compounds zu einer Farbveränderung nach Lagerung in Wasser für sieben Tage bei Raumtemperatur kommt. Dies wird beobachtet sowohl bei Verwendung von Depal zusammen mit Melaminpolyphosphat als auch bei Verwendung von Depal mit Phopal. Die Beispiele B1 und B2 zeigen, dass durch den Zusatz von 10 % Polyethylenterephthalat die Farbänderung nach Wasserlagerung nahezu vollständig verschwindet. Gleichzeitig bleibt die Brandklasse UL 94 V-0 erhalten und die mechanischen Werte sind auf hohem Niveau. Die erfindungsgemäßen Formkörper zeigen eine hohe Oberflächengüte, sind gut zu verarbeiten und Wärmealterungsbeständig.

Beispiel 3 zeigt dass auch unter Verwendung eines Compatibilizers die gute Farbstabilität durch Zusatz von PET erreicht wird. Dadurch wird zudem die Phasenverträglichkeit von PA 66 und PET verbessert, was zu höheren mechanischen Werten führt.

**Tabelle 2: PA66/PET GF 30 V-0 mit und ohne Compatibilizer**

| Beispiel | V3 | B3 |
|---|---|---|
| Polyamid 66 | 56 | 44 |
| Depal | 12 | 12 |
| ZeMac E60-P EMA Copolymer | | 2 |
| Glasfaser | 30 | 30 |
| Ruß Masterbatch (30 % Ruß in PA 6) | 2 | 2 |
| Polyethylenterephthalat | | 10 |
| dEab(D65) 7 Tage in Wasser | 3,39 | 0,21 |

**Tabelle 3: PA66/PET GF 30 V-0, B4-6: Variation des PET Gehaltes, V4 mit Polystyrol anstelle von PET**

| Beispiel | V4 | B4 | B5 | B6 |
|---|---|---|---|---|
| PA 66 | 46 | 52 | 50 | 46 |
| Depal | 12 | 12 | 12 | 12 |
| Glasfaser | 30 | 30 | 30 | 30 |
| Ruß Masterbatch (30% in PA 6) | 2 | 2 | 2 | 2 |
| PET | | 4 | 6 | 10 |
| PS | 10 | | | |
| dE*ab(D65) 7 Tage in Wasser | 3,65 | 0,16 | 0,16 | 0,15 |

Die Beispiele B4 und B5 zeigen dass auch ein geringerer Zusatz von PET zu dem Effekt führt dass es keine Farbänderung nach Wasserlagerung gibt. Beispiel 7 zeigt dass auch der Zusatz von PBT und von einem Polyesterelastomer zu weniger Farbänderung nach Wasserlagerung führt. Die Vergleichsbeispiele V4 und V5 zeigen dass die Zugabe von Polystyrol oder Polyethylenglycol dagegen keinen Einfluss auf die Farbänderung nach Wasserlagerung hat.

**Tabelle 4: Zusatz von Polyglycol, Polyesterelastomer und PBT**

| Beispiel | V5 | B7 | B8 | V6 |
|---|---|---|---|---|
| PA 66 | 56 | 46 | 46 | 46 |
| Depal | 12 | 12 | 12 | 12 |
| Glasfaser | 30 | 30 | 30 | 30 |
| Ruß Masterbatch (30% in PA 6) | 2 | 2 | 2 | 2 |
| Polyglykol | | | | 10 |
| PBT | | 10 | | |
| Polyesterelastomer | | | 10 | |
| dE*ab(D65) | 4,15 | 0,32 | 0,15 | 4,81 |

**Tabelle 5: Zusatz von PC, ABS, SEBS und Polycaprolactone**

| Beispiel | V7 | V8 | V9 | V10 | B9 |
|---|---|---|---|---|---|
| PA 66 | 46 | 46 | 46 | 46 | 46 |
| Depal | 12 | 12 | 12 | 12 | 12 |
| Glasfaser | 30 | 30 | 30 | 30 | 30 |
| Ruß Masterbatch (30% in PA 6) | 2 | 2 | 2 | 2 | 2 |
| ABS Novodur P2H-AT | 10 | | | | |
| PC Makrolon 3208 | | 10 | | | |
| Polycaprolactone | | | 10 | | |
| Lotader AX 8700 | | | | | 5 |
| SEBS Kraton FG 1901 GT | | | | 10 | |
| PET Polyclear 3300 | | | | | 5 |
| dE*ab(D65) | 3,25 | 1,28 | 1,6 | 1,92 | 0,18 |
| Oberflächengüte | gut | mäßig | mäßig | gut | gut |

Beispiel B9 zeigt dass auch bei Zugabe von PET und Verträglichkeitsvermittler (Lotader^{®}) keine Farbänderung nach Wasserlagerung beobachtet wird. Bei Zusatz der anderen Polymeren wird dagegen sowohl eine Verfärbung nach Wasserlagerung beobachtet als auch eine verschlechterte Oberflächengüte, erkennbar an Glasfasern an der Oberflächen ("wolkige" Oberflächen).

## Patentansprüche

1. Flammwidrige Polyamidzusammensetzung, enthaltend
als Komponente A) 1 bis 96 Gew.-% eines oder mehrere thermoplastische Polyamide, als Komponente B) 2 bis 25 Gew.-% eines Diorganylphosphinsäuresalzes der Formel (I) 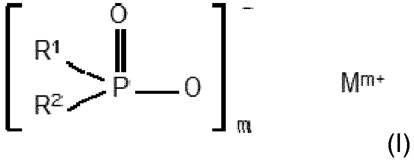 worin
R¹ und R² gleich oder verschieden sind und C₁-C₁₈-Alkyl linear, verzweigt oder cyclisch, C₆-C₁₈-Aryl, C₇-C₁₈-Arylalkyl und/oder C₇-C₁₈-Alkylaryl,
M Mg, Ca, Al, Sb, Sn, Ge, Ti, Zn, Fe, Zr, Ce, Bi, Sr, Mn, Li, Na, K und/oder eine protonierte Stickstoffbase;
m 1 bis 4;
n 1 bis 4;
bedeuten,
als Komponente C) 2 - 20 Gew.-% mindestens eine weitere Polymerkomponente, ausgewählt aus den Klassen thermoplastische Polyester und Polyesterelastomere,
als Komponente D) 0 bis 20 Gew.-% eines Salzes der phosphorigen Säure der allgemeinen Formel (II)
[HP(=O)O₂]²⁻M ^{m+} (II)
worin
M Mg, Ca, Al, Sb, Sn, Ge, Ti, Zn, Fe, Zr, Ce, Bi, Sr, Mn, Li, Na und/oder K bedeuten,
als Komponente E) 0 bis 20 Gew.-% eines oder mehrerer Kondensationsprodukte des Melamins und/oder Umsetzungsprodukte von Melamin mit Phosphorsäuren und/oder Melamincyanurat,
als Komponente F) 0 bis 50 Gew.-% Füll- und/oder Verstärkungsstoff,
als Komponente G) 0 - 5% eines Verträglichkeitsvermittlers für die Polymerkomponenten
als Komponente H) 0 bis 2 Gew.-% Phosphit oder Phosphonit oder Mischungen davon und als Komponente I) 0 bis 2 Gew.-% eines Esters oder Salzes von langkettigen aliphatischen Carbonsäuren (Fettsäuren), die typischerweise Kettenlängen von C₁₄ bis C₄₀ aufweisen, wobei die Summe der Komponenten immer 100 Gew.-% beträgt.

2. Flammwidrige Polyamidzusammensetzung nach Anspruch 1, **dadurch gekennzeichnet, dass** es sich bei den Polyamiden um Polyamid 6 oder Polyamid 66 oder Mischungen von Polyamid 6 mit Polyamid 66 und/oder um Polyphthalamide handelt.

3. Flammwidrige Polyamidzusammensetzung nach Anspruch 1 oder 2, **dadurch gekennzeichnet, dass** R¹, R² in Formel (I) gleich oder verschieden sind und Methyl, Ethyl, n-Propyl, iso-Propyl, n-Butyl, tert.-Butyl, n-Pentyl, Hexyl und/oder Phenyl bedeuten.

4. Flammwidrige Polyamidzusammensetzung nach mindestens einem der Ansprüche 1 bis 3, **dadurch gekennzeichnet, dass** es sich bei den thermoplastischen Polyestern und Polyesterelastomeren um Polyalkylenterephthalate handelt.

5. Flammwidrige Polyamidzusammensetzung nach mindestens einem der Ansprüche 1 bis 4, **dadurch gekennzeichnet, dass** es bei den Polyalkylenterephthalaten um Polyethylentherephthalat, Polybutylentherephthalat und/oder Copolyester-Elastomere handelt.

6. Flammwidrige Polyamidzusammensetzung nach mindestens einem der Ansprüche 1 bis 5, **dadurch gekennzeichnet, dass** es sich bei der Komponente D) um Umsetzungsprodukte von phosphoriger Säure mit Aluminiumverbindungen handelt.

7. Flammwidrige Polyamidzusammensetzung nach mindestens einem der Ansprüche 1 bis 6, **dadurch gekennzeichnet, dass** es sich bei der Komponente D) um Aluminiumphosphit [Al(H₂PO₃)₃], sekundäres Aluminiumphosphit [Al₂(HPO₃)₃], basisches Aluminiumphosphit [Al(OH)(H₂PO₃)₂*2aq], Aluminiumphosphittetrahydrat [Al₂(HPO₃)₃*4aq], Aluminiumphosphonat, Al₇(HPO₃)₉(OH)₆(1,6-Hexandiamin)_{1,5}*12H₂O, Al₂(HPO₃)³*xAl₂O₃*nH₂O mit x = 1 - 2,27 und n = 1 - 50 und/oder Al₄H₆P₁₆O₁₈ handelt oder um Aluminiumphosphite der Formeln (III), (IV) und/oder (V) handelt, wobei
Formel (III): Al₂(HPO₃)₃ x (H₂O)_{q}
umfasst und
q 0 bis 4 bedeutet;
Formel (IV) Al_{2,00}M_{z}(HPO₃)_{y}(OH)ᵥ x (H₂O)_{w}
umfasst und
M Alkalimetallionen,
z 0,01 bis 1,5,
y 2,63 bis 3,5,
v 0 bis 2 und
w 0 bis 4 bedeutet;
Formel (V) Al₂,₀₀(HPO₃)ᵤ(H₂PO₃)ₜ x (H₂O)ₛ
umfasst und
u 2 bis 2,99 und
t 2 bis 0,01 und
s 0 bis 4 bedeutet,
oder das Aluminiumphosphit Mischungen von Aluminiumphosphit der Formel (III) mit schwerlöslichen Aluminiumsalzen und stickstofffreien Fremdionen, Mischungen von Aluminiumphosphit der Formel (IV) mit Aluminiumsalzen, um Mischungen von Aluminiumphosphiten der Formeln (III) bis (V) mit Aluminiumphosphit [Al(H₂PO₃)₃], mit sekundäres Aluminiumphosphit [Al₂(HPO₃)₃], mit basischem Aluminiumphosphit [Al(OH)(H₂PO₃)₂*2aq], mit Aluminiumphosphittetrahydrat [Al₂(HPO₃)₃*4aq], mit Aluminiumphosphonat, mit Al₇(HPO₃)₉(OH)₆(1,6-Hexandiamin)_{1,5}*12H₂O, mit Al₂(HPO₃)₃*xAl₂O₃*nH₂O mit x = 1 - 2,27 und n = 1 - 50 und/oder mit Al₄H₆P₁₆O₁₈ umfasst.

8. Flammwidrige Polyamidzusammensetzung nach mindestens einem der Ansprüche 1 bis 7, **dadurch gekennzeichnet, dass** es sich bei der Komponente E) um Kondensationsprodukte des Melamins und/oder um Umsetzungsprodukte von Melamin mit Polyphosphorsäure und/oder um Umsetzungsprodukte von Kondensationsprodukten des Melamins mit Polyphosphorsäure oder Gemische davon; um Melem, Melam, Melon, Dimelaminpyrophosphat, Melaminpolyphosphat, Melempolyphosphat, Melampolyphosphat, Melonpolyphosphat und/oder gemischte Polysalze davon; um stickstoffhaltige Phosphate der Formeln (NH₄)_{y} H_{3-y} PO₄ bzw. (NH₄ PO₃)_{z}, mit y gleich 1 bis 3 und z gleich 1 bis 10.000, handelt.

9. Flammwidrige Polyamidzusammensetzung nach mindestens einem der Ansprüche 1 bis 8, **dadurch gekennzeichnet, dass** es sich bei der Komponente E) um Glasfasern, Glaskugeln und/oder mineralische Füllstoffe handelt.

10. Flammwidrige Polyamidzusammensetzung nach mindestens einem der Ansprüche 1 bis 9, **dadurch gekennzeichnet, dass** es sich bei Komponente G) um Phthalsäureanhydride, Pyromellithsäureanhydrid, Trimellitsäureanhydrid, mit Maleinsäureanhydrid gepfropfte Polyolefine; um Epoxyverbindungen, Epoxy-funktionelle Acrylate, Bisoxazoline, Carbodiimde, Diisocyanate und/oder Diurethane handelt.

11. Flammwidrige Polyamidzusammensetzung nach mindestens einem der Ansprüche 1 bis 10, **dadurch gekennzeichnet, dass** es sich bei den Phosphoniten (Komponente H) um solche der allgemeinen Struktur
R-[P(OR⁵)₂]ₘ (VI)
handelt, wobei
R ein ein- oder mehrwertiger aliphatischer, aromatischer oder hetero-aromatischer organischer Rest ist und
R⁵ eine Verbindung der Struktur (VII) 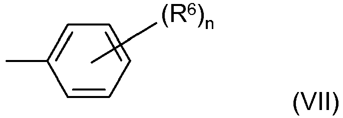
ist oder die beiden Reste R⁵ eine verbrückende Gruppe der Struktur (VIII) bilden 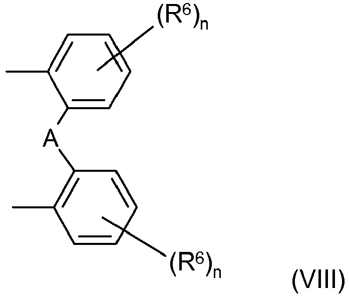 mit
A direkter Bindung, O, S, C₁₋₁₈-Alkylen (linear oder verzweigt), C₁₋₁₈-Alkyliden (linear oder verzweigt), in denen
R⁶ unabhängig voneinander C₁₋₁₂-Alkyl (linear oder verzweigt), C₁₋₁₂-Alkoxy und/oder C₅₋₁₂-Cycloalkyl bedeuten und
n 0 bis 5 sowie
m 1 bis 4 bedeutet.

12. Flammwidrige Polyamidzusammensetzung nach mindestens einem der Ansprüche 1 bis 11, **dadurch gekennzeichnet, dass** es sich bei der Komponente I) um Alkali-, Erdalkali-, Aluminium- und/oder Zinksalze von langkettigen Fettsäuren mit 14 bis 40 C-Atomen und/oder um Umsetzungsprodukte von langkettigen Fettsäuren mit 14 bis 40 C-Atomen mit mehrwertigen Alkoholen, wie Ethylenglykol, Glycerin, Trimethylolpropan und/oder Pentaerythrit, handelt.

13. Flammwidrige Polyamidzusammensetzung nach mindestens einem der Ansprüche 1 bis 12, **dadurch gekennzeichnet, dass** sie
| | |
|---|---|
| 30 bis 79,9 | Gew.-% Komponente A), |
| 5 bis 20 | Gew.-% Komponente B), |
| 5 bis 20 | Gew.-% Komponente C), |
| 0 bis 20 | Gew.-% Komponente D), |
| 0 bis 20 | Gew.-% Komponente E), |
| 10 bis 40 | Gew.-% Komponente F) |
| 0 bis 20 | Gew.-% Komponente G), |
| 0 bis 2 | Gew.-% Komponente H) und |
| 0,1 bis 2 | Gew.-% Komponente I) enthält |

14. Flammwidrige Polyamidzusammensetzung nach mindestens einem der Ansprüche 1 bis 12, **dadurch gekennzeichnet, dass** sie
| | |
|---|---|
| 30 bis 74,6 | Gew.-% Komponente A), |
| 5 bis 20 | Gew.-% Komponente B), |
| 5 bis 20 | Gew.-% Komponente C), |
| 0 bis 20 | Gew.-% Komponente D), |
| 0 bis 20 | Gew.-% Komponente E), |
| 15 bis 35 | Gew.-% Komponente F) |
| 0,3 bis 10 | Gew.-% Komponente G), |
| 0 bis 2 | Gew.-% Komponente H) und |
| 0,1 bis 2 | Gew.-% Komponente I) enthält |

15. Flammwidrige Polyamidzusammensetzung nach mindestens einem der Ansprüche 1 bis 12, **dadurch gekennzeichnet, dass** sie
| | |
|---|---|
| 30 bis 71,6 | Gew.-% Komponente A), |
| 5 bis 20 | Gew.-% Komponente B), |
| 5 bis 20 | Gew.-% Komponente C), |
| 3 bis 10 | Gew.-% Komponente D), |
| 0 bis 20 | Gew.-% Komponente E), |
| 15 bis 35 | Gew.-% Komponente F) |
| 0,3 bis 10 | Gew.-% Komponente G), |
| 0 bis 2 | Gew.-% Komponente H) und |
| 0,1 bis 2 | Gew.-% Komponente I) enthält |

16. Flammwidrige Polyamidzusammensetzung nach mindestens einem der Ansprüche 1 bis 12, **dadurch gekennzeichnet, dass** sie
| | |
|---|---|
| 30 bis 71,6 | Gew.-% Komponente A), |
| 5 bis 20 | Gew.-% Komponente B), |
| 5 bis 20 | Gew.-% Komponente C), |
| 0 bis 10 | Gew.-% Komponente D), |
| 3 bis 10 | Gew.-% Komponente E), |
| 15 bis 35 | Gew.-% Komponente F) |
| 0,3 bis 10 | Gew.-% Komponente G), |
| 0 bis 2 | Gew.-% Komponente H) und |
| 0,1 bis 2 | Gew.-% Komponente I) enthält |

17. Flammwidrige Polyamidzusammensetzung nach mindestens einem der Ansprüche 1 bis 12, **dadurch gekennzeichnet, dass** sie
| | |
|---|---|
| 30 bis 71,4 | Gew.-% Komponente A), |
| 5 bis 20 | Gew.-% Komponente B), |
| 5 bis 20 | Gew.-% Komponente C), |
| 0,1 bis 10 | Gew.-% Komponente D), |
| 3 bis 10 | Gew.-% Komponente E), |
| 15 bis 35 | Gew.-% Komponente F) |
| 0,3 bis 10 | Gew.-% Komponente G), |
| 0,1 bis 2 | Gew.-% Komponente H) und |
| 0,1 bis 2 | Gew.-% Komponente I) enthält |

18. Flammwidrige Polyamidzusammensetzung nach mindestens einem der Ansprüche 1 bis 17, **dadurch gekennzeichnet, dass** sie weiterhin Telomere enthalten und es sich bei den Telomeren um Ethylbutylphosphinsäure, Dibutylphosphinsäure, Ethylhexylphosphinsäure, Butylhexylphosphinsäure, Ethyloctylphosphinsäure, sec-Butylethylphosphinsäure, 1-Ethylbutyl-Butylphosphinsäure, Ethyl-1-Methylpentylphosphinsäure, Di-sec-Butylphosphinsäure (Di-1-Methylpropylphosphinsäure), Propyl-Hexylphosphinsäure, Dihexylphosphinsäure, Hexyl-Nonylphosphinsäure, Dinonylphosphinsäure und/oder ihre Salze mit den Metallen von Mg, Ca, Al, Sb, Sn, Ge, Ti, Zn, Fe, Zr, Ce, Bi, Sr, Mn, Li, Na, K handelt und die Telomere verschieden von der Komponente A) sind.

19. Flammwidrige Polyamidzusammensetzung nach mindestens einem der Ansprüche 1 bis 18, **dadurch gekennzeichnet, dass** sie zusätzlich Zinkoxid, Zinkborat und/oder Zinkstannat enthält.

20. Flammwidrige Polyamidzusammensetzung nach mindestens einem der Ansprüche 1 bis 19, **dadurch gekennzeichnet, dass** sie weitere Additive enthält, wobei die weiteren Additive ausgewählt sind aus der Gruppe Antioxidantien, UV-Stabilisatoren, Gammastrahlen-stabilisatoren, Hydrolysestabilisatoren, Co-Stabilisatoren für Antioxidantien, Antistatika, Emulgatoren, Nukleierungsmitteln, Weichmachern, Verarbeitungshilfsmitteln, Schlagzähmodifikatoren, Farbstoffen, Pigmenten und/oder weiteren Flammschutzmitteln, die sich von Komponenten B), D), E), F), H) und I) unterscheiden .

21. Flammwidrige Polyamidzusammensetzung nach mindestens einem der Ansprüche 1 bis 20, **dadurch gekennzeichnet, dass** sie als weitere Komponente Eisen in Form einer eisenhaltigen Substanz enthält, wobei die Menge an eisenhaltiger Substanz 0,0001 bis 10 Gew.-% der Gesamtmischung beträgt.

22. Verwendung einer flammhemmenden Polyamidzusammensetzung nach einem oder mehreren der Ansprüche 1 bis 21 im Elektro- und Elektronikbereich, in oder für Steckverbinder, stromberührte Teile in Stromverteilern (FI-Schutz), Platinen, Vergußmassen, Stromsteckern, Schutzschaltern, Lampengehäuse (LED Gehäuse), Kondensatorgehäuse, Spulenkörper und Ventilatoren für Schutzkontakte, Stecker, in/auf Platinen, Gehäuse für Stecker, Kabel, flexible Leiterplatten, Ladekabel für Handys, Motorabdeckungen, Textilbeschichtungen und anderen Produkten.

23. Verwendung nach Anspruch 22, **dadurch gekennzeichnet, dass** die Polyamide als Formkörper, Filme, Fäden, Folien und/oder Fasern vorliegen.

24. Dreidimensionaler Artikel umfassend die flammwidrige Polyamidzusammensetzung nach einem oder mehreren der Ansprüche 1 bis 21, **dadurch gekennzeichnet, dass** es sich hierbei Formkörper, Spritzgussteile, Extrusionsmassen und/oder Extrusionsteile handelt.

## Claims

1. Flame-retardant polyamide composition comprising
as component A) 1% to 96% by weight of one or more thermoplastic polyamides, as component B) 2% to 25% by weight of a diorganylphosphinic salt of the formula (I) 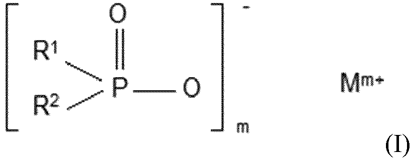 in which
R¹ and R² are the same or different and are C₁-C₁₈ alkyl in linear, branched or cyclic form, C₆-C₁₈ aryl, C₇-C₁₈ arylalkyl and/or C₇-C₁₈ alkylaryl,
M is Mg, Ca, Al, Sb, Sn, Ge, Ti, Zn, Fe, Zr, Ce, Bi, Sr, Mn, Li, Na, K and/or a protonated nitrogen base;
m is 1 to 4;
n is 1 to 4,
as component C) 2-20% by weight of at least one further polymer component selected from the thermoplastic polyester and polyester elastomer classes,
as component D) 0 to 20% by weight of a salt of phosphorous acid of the general formula (II)
[HP(=O)O₂]²⁻M^{m+} (II)
in which
M is Mg, Ca, Al, Sb, Sn, Ge, Ti, Zn, Fe, Zr, Ce, Bi, Sr, Mn, Li, Na and/or K,
as component E) 0% to 20% by weight of one or more condensation products of melamine and/or reaction products of melamine with phosphoric acids and/or melamine cyanurate,
as component F) 0% to 50% by weight of filler and/or reinforcer,
as component G) 0%-5% of a compatibilizer for the polymer components
as component H) 0% to 2% by weight of phosphite or phosphonite or mixtures thereof,
and as component I) 0% to 2% by weight of an ester or salt of long-chain aliphatic carboxylic acids (fatty acids) typically having chain lengths of C₁₄ to C₄₀, wherein the sum total of the components is always 100% by weight.

2. Flame-retardant polyamide composition according to Claim 1, **characterized in that** the polyamides are nylon-6 or nylon-6,6 or mixtures of nylon-6 with nylon-6,6 and/or polyphthalamides.

3. Flame-retardant polyamide composition according to Claim 1 or 2, **characterized in that** R¹, R² in formula (I) are the same or different and are methyl, ethyl, n-propyl, isopropyl, n-butyl, tert-butyl, n-pentyl, hexyl and/or phenyl.

4. Flame-retardant polyamide composition according to at least one of Claims 1 to 3, **characterized in that** the thermoplastic polyesters and polyester elastomers are polyalkylene terephthalates.

5. Flame-retardant polyamide composition according to at least one of Claims 1 to 4, **characterized in that** the polyalkylene terephthalates are polyethylene terephthalate, polybutylene terephthalate and/or copolyester elastomers.

6. Flame-retardant polyamide composition according to at least one of Claims 1 to 5, **characterized in that** component D) comprises reaction products of phosphorous acid with aluminum compounds.

7. Flame-retardant polyamide composition according to at least one of Claims 1 to 6, **characterized in that** component D) comprises aluminum phosphite [Al(H₂PO₃)₃], secondary aluminum phosphite [Al₂(HPO₃)₃], basic aluminum phosphite [Al(OH)(H₂PO₃)₂^{∗}2aq], aluminum phosphite tetrahydrate [Al₂(HPO₃)₃^{∗}4aq], aluminum phosphonate, Al₇(HPO₃)₉(OH)₆(1,6-hexanediamine)_{1.5}^{∗}12H₂O, Al₂(HPO₃)^{3∗}xAl₂O₃^{∗}nH₂O where x = 1-2.27 and n = 1-50 and/or Al₄H₆P₁₆O₁₈ or aluminum phosphites of the formulae (III), (IV) and/or (V), where
formula (III) comprises: Al₂(HPO₃)₃ x (H₂O)_{q}
and
q is 0 to 4;
formula (IV) comprises Al_{2.00}M_{z}(HPO₃)_{y}(OH)ᵥ x (H₂O)_{w}
and
M represents alkali metal ions,
z is 0.01 to 1.5,
y is 2.63 to 3.5,
v is 0 to 2, and
w is 0 to 4;
formula (V) comprises Al_{2.00}(HPO₃)ᵤ(H₂PO₃)ₜ x (H₂O)ₛ
and
u is 2 to 2.99 and
t is 2 to 0.01, and
s is 0 to 4,
or the aluminum phosphite comprises mixtures of aluminum phosphite of the formula (III) with sparingly soluble aluminum salts and nitrogen-free extraneous ions, mixtures of aluminum phosphite of the formula (IV) with aluminum salts, mixtures of aluminum phosphites of the formulae (III) to (V) with aluminum phosphite [Al(H₂PO₃)₃], with secondary aluminum phosphite [Al₂(HPO₃)₃], with basic aluminum phosphite [Al(OH)(H₂PO₃)₂^{∗}2aq], with aluminum phosphite tetrahydrate [Al₂(HPO₃)₃^{∗}4aq], with aluminum phosphonate, with Al₇(HPO₃)₉(OH)₆(1,6-hexanediamine)_{1.5}^{∗}12H₂O, with Al₂(HPO₃)₃^{∗}xAl₂O₃^{∗}nH₂O where x = 1-2.27 and n = 1-50 and/or with Al₄H₆P₁₆O₁₈.

8. Flame-retardant polyamide composition according to at least one of Claims 1 to 7, **characterized in that** component E) comprises condensation products of melamine and/or reaction products of melamine with polyphosphoric acid and/or reaction products of condensation products of melamine with polyphosphoric acid or mixtures thereof; melem, melam, melon, dimelamine pyrophosphate, melamine polyphosphate, melem polyphosphate, melam polyphosphate, melon polyphosphate, and/or mixed polysalts thereof; nitrogen-containing phosphates of the formulae (NH₄)_{y} H_{3-y} PO₄ or (NH₄ PO₃)_{z}, where y is 1 to 3 and z is 1 to 10 000.

9. Flame-retardant polyamide composition according to at least one of Claims 1 to 8, **characterized in that** component E) comprises glass fibers, glass beads and/or mineral fillers.

10. Flame-retardant polyamide composition according to at least one of Claims 1 to 9, **characterized in that** component G) is phthalic anhydrides, pyromellitic anhydride, trimellitic anhydride, polyolefins grafted with maleic anhydride; epoxy compounds, epoxy-functional acrylates, bisoxazolines, carbodiimides, diisocyanates and/or diurethanes.

11. Flame-retardant polyamide composition according to at least one of Claims 1 to 10, **characterized in that** the phosphonites (component H) are those of the general structure
R-[P(OR⁵)₂]ₘ (VI)
where
R is a mono- or polyvalent aliphatic, aromatic or heteroaromatic organic radical and
R⁵ is a compound of the structure (VII) 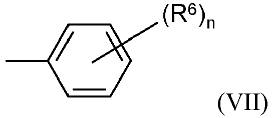
or the two R⁵ radicals form a bridging group of the structure (VIII) 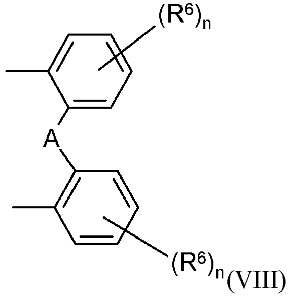 where
A is a direct bond, O, S, C₁₋₁₈ alkylene (linear or branched), C₁₋₁₈ alkylidene (linear or branched), in which
R⁶ is independently C₁₋₁₂ alkyl (linear or branched), C₁₋₁₂ alkoxy, and/or C₅₋₁₂ cycloalkyl, and
n is 0 to 5 and
m is 1 to 4.

12. Flame-retardant polyamide composition according to at least one of Claims 1 to 11, **characterized in that** component I) comprises alkali metal, alkaline earth metal, aluminum and/or zinc salts of long-chain fatty acids having 14 to 40 carbon atoms and/or reaction products of long-chain fatty acids having 14 to 40 carbon atoms with polyhydric alcohols such as ethylene glycol, glycerol, trimethylolpropane and/or pentaerythritol.

13. Flame-retardant polyamide composition according to at least one of Claims 1 to 12, **characterized in that** it comprises
| | |
|---|---|
| 30% to 79.9% | by weight of component A), |
| 5% to 20% | by weight of component B), |
| 5% to 20% | by weight of component C), |
| 0% to 20% | by weight of component D), |
| 0% to 20% | by weight of component E), |
| 10% to 40% | by weight of component F), |
| 0% to 20% | by weight of component G), |
| 0% to 2% | by weight of component H), and |
| 0.1% to 2% | by weight of component I). |

14. Flame-retardant polyamide composition according to at least one of Claims 1 to 12, **characterized in that** it comprises
| | |
|---|---|
| 30% to 74.6% | by weight of component A), |
| 5% to 20% | by weight of component B), |
| 5% to 20% | by weight of component C), |
| 0% to 20% | by weight of component D), |
| 0% to 20% | by weight of component E), |
| 15% to 3 5% | by weight of component F), |
| 0.3% to 10% | by weight of component G), |
| 0% to 2% | by weight of component H), and |
| 0.1% to 2% | by weight of component I). |

15. Flame-retardant polyamide composition according to at least one of Claims 1 to 12, **characterized in that** it comprises
| | |
|---|---|
| 30% to 71.6% | by weight of component A), |
| 5% to 20% | by weight of component B), |
| 5% to 20% | by weight of component C), |
| 3% to 10% | by weight of component D), |
| 0% to 20% | by weight of component E), |
| 15% to 3 5% | by weight of component F), |
| 0.3% to 10% | by weight of component G), |
| 0% to 2% | by weight of component H), and |
| 0.1% to 2% | by weight of component I). |

16. Flame-retardant polyamide composition according to at least one of Claims 1 to 12, **characterized in that** it comprises
| | |
|---|---|
| 30% to 71.6% | by weight of component A), |
| 5% to 20% | by weight of component B), |
| 5% to 20% | by weight of component C), |
| 0% to 10% | by weight of component D), |
| 3% to 10% | by weight of component E), |
| 15% to 3 5% | by weight of component F), |
| 0.3% to 10% | by weight of component G), |
| 0% to 2% | by weight of component H), and |
| 0.1% to 2% | by weight of component I). |

17. Flame-retardant polyamide composition according to at least one of Claims 1 to 12, **characterized in that** it comprises
| | |
|---|---|
| 30% to 71.4% | by weight of component A), |
| 5% to 20% | by weight of component B), |
| 5% to 20% | by weight of component C), |
| 0.1% to 10% | by weight of component D), |
| 3% to 10% | by weight of component E), |
| 15% to 3 5% | by weight of component F), |
| 0.3% to 10% | by weight of component G), |
| 0.1% to 2% | by weight of component H), and |
| 0.1% to 2% | by weight of component I). |

18. Flame-retardant polyamide composition according to at least one of Claims 1 to 17, **characterized in that** it further comprises telomers and the telomers comprise ethylbutylphosphinic acid, dibutylphosphinic acid, ethylhexylphosphinic acid, butylhexylphosphinic acid, ethyloctylphosphinic acid, sec-butylethylphosphinic acid, (1-ethylbutyl)butylphosphinic acid, ethyl(1-methylpentyl)phosphinic acid, di-sec-butylphosphinic acid (di-1-methylpropylphosphinic acid), propyl(hexyl)phosphinic acid, dihexylphosphinic acid, hexyl(nonyl)phosphinic acid, dinonylphosphinic acid and/or salts thereof with the metals Mg, Ca, Al, Sb, Sn, Ge, Ti, Zn, Fe, Zr, Ce, Bi, Sr, Mn, Li, Na, K, and the telomers are different from component A).

19. Flame-retardant polyamide composition according to at least one of Claims 1 to 18, **characterized in that** it additionally comprises zinc oxide, zinc borate and/or zinc stannate.

20. Flame-retardant polyamide composition according to at least one of Claims 1 to 19, **characterized in that** it comprises further additives, wherein the further additives are selected from the group consisting of antioxidants, UV stabilizers, gamma-ray stabilizers, hydrolysis stabilizers, co-stabilizers for antioxidants, antistats, emulsifiers, nucleating agents, plasticizers, processing auxiliaries, impact modifiers, dyes, pigments and/or further flame retardants other than components B), D), E), F), H) and I).

21. Flame-retardant polyamide composition according to at least one of Claims 1 to 20, **characterized in that** it comprises, as a further component, iron in the form of an iron-containing substance, wherein the amount of iron-containing substance is 0.0001% to 10% by weight of the total mixture.

22. Use of a flame-retardant polyamide composition according to one or more of Claims 1 to 21 in the electricals and electronics sector, in or for plug connectors, current-bearing components in power distributors (residual current protection), printed circuit boards, potting compounds, power connectors, circuit breakers, lamp housings (LED housings), capacitor housings, coil elements and ventilators for grounding contacts, plugs, in/on printed circuit boards, housings for plugs, cables, flexible circuit boards, charging cables for mobile phones, motor covers, textile coatings and other products.

23. Use according to Claim 22, **characterized in that** the polyamides are in the form of shaped bodies, films, filaments, foils and/or fibers.

24. Three-dimensional article comprising the flame-retardant polyamide composition according to one or more of Claims 1 to 21, **characterized in that** said article is a shaped body, injection molding, extrusion compound and/or extrudate.

## Revendications

1. Composition ignifuge de polyamide, contenant
comme composant A) 1 à 96% en poids d'un ou de plusieurs polyamides thermoplastiques,
comme composant B) 2 à 25% en poids d'un sel d'acide diorganylphosphinique de formule (I) 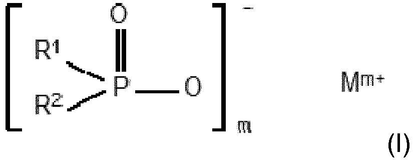 dans laquelle
R¹ et R² sont identiques ou différents et signifient C₁-C₁₈-alkyle linéaire, ramifié ou cyclique, C₆-C₁₈-aryle, C₇-C₁₈-arylalkyle et/ou C₇-C₁₈-alkylaryle,
M signifie Mg, Ca, Al, Sb, Sn, Ge, Ti, Zn, Fe, Zr, Ce, Bi, Sr, Mn, Li, Na, K et/ou une base azotée protonée ;
m signifie 1 à 4 ;
n signifie 1 à 4 ;
comme composant C) 2-20% en poids d'au moins un autre composant polymère, choisi parmi les classes des polyesters thermoplastiques et des élastomères de polyester,
comme composant D) 0 à 20% en poids d'un sel de l'acide phosphoreux de formule générale (II)
[HP(=O)O₂]²-M^{m+} (II)
dans laquelle
M signifie Mg, Ca, Al, Sb, Sn, Ge, Ti, Zn, Fe, Zr, Ce, Bi, Sr, Mn, Li, Na et/ou K,
comme composant E) 0 à 20% en poids d'un ou de plusieurs produits de condensation de la mélamine et/ou produits de transformation de mélamine avec des acides phosphoriques et/ou du cyanurate de mélamine,
comme composant F) 0 à 50% en poids d'additif et/ou de substance de renforcement,
comme composant G) 0-5% en poids d'un promoteur de compatibilité pour les composants polymères,
comme composant H) 0 à 2% en poids de phosphite ou de phosphonite ou de mélanges de ceux-ci et
comme composant I) 0 à 2% en poids d'un ester ou d'un sel d'acides carboxyliques aliphatiques à longue chaîne (acides gras) qui présentent habituellement des longueurs de chaîne de C₁₄ à C₄₀,
la somme des composants valant toujours 100% en poids.

2. Composition ignifuge de polyamide selon la revendication 1, **caractérisée en ce qu'**il s'agit, pour les polyamides, de polyamide 6 ou de polyamide 66 ou de mélanges de polyamide 6 avec du polyamide 66 et/ou de polyphtalamides.

3. Composition ignifuge de polyamide selon la revendication 1 ou 2, **caractérisée en ce que** R¹, R² dans la formule (I) sont identiques ou différents et signifient méthyle, éthyle, n-propyle, iso-propyle, n-butyle, tert-butyle, n-pentyle, hexyle et/ou phényle.

4. Composition ignifuge de polyamide selon au moins l'une quelconque des revendications 1 à 3, **caractérisée en ce qu'**il s'agit, pour les polyesters thermoplastiques et les élastomères de polyester, de poly(téréphtalates d'alkylène).

5. Composition ignifuge de polyamide selon au moins l'une quelconque des revendications 1 à 4, **caractérisée en ce qu'**il s'agit, pour les poly(téréphtalates d'alkylène), de poly(téréphtalate d'éthylène), de poly(téréphtalate de butylène) et/ou d'élastomères de copolyester.

6. Composition ignifuge de polyamide selon au moins l'une quelconque des revendications 1 à 5, **caractérisée en ce qu'**il s'agit, pour le composant D), de produits de transformation de l'acide phosphoreux avec des composés à base d'aluminium.

7. Composition ignifuge de polyamide selon au moins l'une quelconque des revendications 1 à 6, **caractérisée en ce qu'**il s'agit, pour le composant D), de phosphite d'aluminium [Al(H₂PO₃)₃], de phosphite d'aluminium secondaire [Al₂(HPO₃)₃], de phosphite d'aluminium basique [Al(OH)(H₂PO₃)₂*2aq], de phosphite d'aluminium tétrahydraté [Al₂(HPO₃)₃*4aq], de phosphonate d'aluminium, d'Al₇(HPO₃)₉(OH)₆(1,6-hexanediamine)_{1,5}*12H₂O, d'Al₂(HPO₃)³*xAl₂O₃*nH₂O avec x = 1-2,27 et n = 1-50 et/ou d'Al₄H₆P₁₆O₁₈ ou de phosphites d'aluminium des formules (III), (IV) et/ou (V), où Formule (III) =
Al₂(HPO₃)₃x(H₂O)_{q}
et
q signifie 0 à 4
Formule (IV) = Al_{2,00}M_{z}(HPO₃)_{y}(OH)ᵥx(H₂O)_{w}
et
M signifie des ions de métal alcalin
z signifie 0,01 à 1,5,
y signifie 2,63 à 3,5,
v signifie 0 à 2 et
w signifie 0 à 4 ;
Formule (V) = Al_{2,00}(HPO₃)ᵤ(H₂PO₃)ₜx(H₂O)ₛ
et
u signifie 2 à 2,99 et
t signifie 2 à 0,01 et
s signifie 0 à 4,
ou le phosphite d'aluminium comprend des mélanges de phosphite d'aluminium de formule (III) avec des sels d'aluminium peu solubles et des ions étrangers exempts d'azote, des mélanges de phosphite d'aluminium de formule (IV) avec des sels d'aluminium, des mélanges de phosphites d'aluminium des formules (III) à (V) avec du phosphite d'aluminium [Al(H₂PO₃)₃], avec du phosphite d'aluminium secondaire [Al₂(HPO₃)₃], avec du phosphite d'aluminium basique [Al(OH)(H₂PO₃)₂*2aq], avec du phosphite d'aluminium tétrahydraté [Al₂(HPO₃)₃*4aq], avec du phosphonate d'aluminium, avec Al₇(HPO₃)₉(OH)₆(1,6-hexanediamine)_{1,5}*12H₂O, avec Al₂(HPO₃)₃*xAl₂O₃*nH₂O avec x = 1-2,27 et n = 1-50 et/ou avec Al₄H₆P₁₆O₁₈.

8. Composition ignifuge de polyamide selon au moins l'une quelconque des revendications 1 à 7, **caractérisée en ce qu'**il s'agit, pour le composant E), de produits de condensation de la mélamine et/ou de produits de transformation de mélamine avec de l'acide polyphosphorique et/ou de produits de transformation de produits de condensation de la mélamine avec de l'acide polyphosphorique ou de leurs mélanges ; de mélem, de mélam, de mélon, de pyrophosphate de dimélamine, de polyphosphate de mélamine, de polyphosphate de mélem, de polyphosphate de mélam, de polyphosphate de mélon et/ou de polysels mixtes de ceux-ci ; de phosphates azotés des formules (NH₄)_{y}H_{3-y}PO₄ ou (NH₄PO₃)_{z}, y valant 1 à 3 et z valant 1 à 10.000.

9. Composition ignifuge de polyamide selon au moins l'une quelconque des revendications 1 à 8, **caractérisée en ce qu'**il s'agit, pour le composant E), de fibres de verre, de billes de verre et/ou de charges minérales.

10. Composition ignifuge de polyamide selon au moins l'une quelconque des revendications 1 à 9, **caractérisée en ce qu'**il s'agit, pour le composant G), d'anhydrides de l'acide phtalique, d'anhydride de l'acide pyromellitique, d'anhydride trimellitique, de polyoléfines greffées d'anhydride de l'acide maléique ; de composés époxy, d'acrylates à fonctionnalité époxy, de bisoxazolines, de carbodiimides, de diisocyanates et/ou de diuréthanes.

11. Composition ignifuge de polyamide selon au moins l'une quelconque des revendications 1 à 10, **caractérisée en ce qu'**il s'agit, pour les phosphonites (composant H), de ceux de structure générale
R-[P(OR⁵)₂]ₘ (VI)
dans laquelle
R représente un radical organique monovalent ou polyvalent, aliphatique, aromatique ou hétéroaromatique et
R⁵ représente un composé de structure (VII) 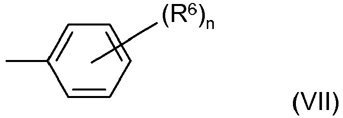
ou les deux radicaux R⁵ forment un groupe pontant de structure (VIII) 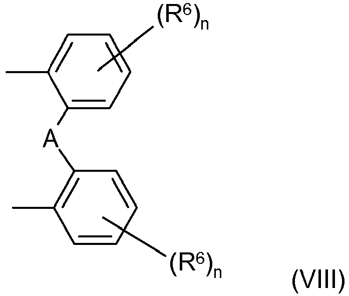 dans laquelle
A représente une liaison directe, O, S, C₁₋₁₈-alkylène (linéaire ou ramifié), C₁₋₁₈-alkylidène (linéaire ou ramifié),
les radicaux R⁶ représentent, indépendamment l'un de l'autre, C₁₋₁₂-alkyle (linéaire ou ramifié), C₁₋₁₂-alcoxy et/ou C₅₋₁₂-cycloalkyle et
n signifie 0 à 5, ainsi que
m signifie 1 à 4.

12. Composition ignifuge de polyamide selon au moins l'une quelconque des revendications 1 à 11, **caractérisée en ce qu'**il s'agit, pour le composant I), de sels de métal alcalin, alcalino-terreux, d'aluminium et/ou de zinc d'acides gras à longue chaîne comprenant 14 à 40 atomes de carbone et/ou de produits de transformation d'acides gras à longue chaîne comprenant 14 à 40 atomes de carbone avec des alcools polyvalents, tels que l'éthylèneglycol, le glycérol, le triméthylolpropane et/ou le pentaérythritol.

13. Composition ignifuge de polyamide selon au moins l'une quelconque des revendications 1 à 12, **caractérisée en ce qu'**elle contient
- 30 à 79,9% en poids de composant A),
- 5 à 20% en poids de composant B),
- 5 à 20% en poids de composant C),
- 0 à 20% en poids de composant D),
- 0 à 20% en poids de composant E),
- 10 à 40% en poids de composant F),
- 0 à 20% en poids de composant G),
- 0 à 2% en poids de composant H)
- et 0,1 à 2% en poids de composant I).

14. Composition ignifuge de polyamide selon au moins l'une quelconque des revendications 1 à 12, **caractérisée en ce qu'**elle contient
- 30 à 74,6% en poids de composant A),
- 5 à 20% en poids de composant B),
- 5 à 20% en poids de composant C),
- 0 à 20% en poids de composant D),
- 0 à 20% en poids de composant E),
- 15 à 35% en poids de composant F),
- 0,3 à 10% en poids de composant G),
- 0 à 2% en poids de composant H) et
- 0,1 à 2% en poids de composant I).

15. Composition ignifuge de polyamide selon au moins l'une quelconque des revendications 1 à 12, **caractérisée en ce qu'**elle contient
- 30 à 71,6% en poids de composant A),
- 5 à 20% en poids de composant B),
- 5 à 20% en poids de composant C),
- 3 à 10% en poids de composant D),
- 0 à 20% en poids de composant E),
- 15 à 35% en poids de composant F),
- 0,3 à 10% en poids de composant G),
- 0 à 2% en poids de composant H) et
- 0,1 à 2% en poids de composant I).

16. Composition ignifuge de polyamide selon au moins l'une quelconque des revendications 1 à 12, **caractérisée en ce qu'**elle contient
- 30 à 71,6% en poids de composant A),
- 5 à 20% en poids de composant B),
- 5 à 20% en poids de composant C),
- 0 à 10% en poids de composant D),
- 3 à 10% en poids de composant E),
- 15 à 35% en poids de composant F),
- 0,3 à 10% en poids de composant G),
- 0 à 2% en poids de composant H) et
- 0,1 à 2% en poids de composant I).

17. Composition ignifuge de polyamide selon au moins l'une quelconque des revendications 1 à 12, **caractérisée en ce qu'**elle contient
- 30 à 71,4% en poids de composant A),
- 5 à 20% en poids de composant B),
- 5 à 20% en poids de composant C),
- 0,1 à 10% en poids de composant D),
- 3 à 10% en poids de composant E),
- 15 à 35% en poids de composant F),
- 0,3 à 10% en poids de composant G),
- 0,1 à 2% en poids de composant H) et
- 0,1 à 2% en poids de composant I).

18. Composition ignifuge de polyamide selon au moins l'une quelconque des revendications 1 à 17, **caractérisée en ce qu'**elle contient en outre des télomères et où il s'agit, pour les télomères, d'acide éthylbutylphosphinique, d'acide dibutylphosphinique, d'acide éthylhexylphosphinique, d'acide butylhexylphosphinique, d'acide éthyloctylphosphinique, d'acide sec-butyléthylphosphinique, d'acide 1-éthylbutyl-butylphosphinique, d'acide éthyl-1-méthylpentylphosphinique, d'acide di-secbutylphosphinique (acide di-1-méthylpropylphosphinique), d'acide propylhexylphosphinique, d'acide dihexylphosphinique, d'acide hexylnonylphosphinique, d'acide dinonylphosphinique et/ou de leurs sels avec les métaux Mg, Ca, Al, Sb, Sn, Ge, Ti, Zn, Fe, Zr, Ce, Bi, Sr, Mn, Li, Na, K et les télomères sont différents du composant A).

19. Composition ignifuge de polyamide selon au moins l'une quelconque des revendications 1 à 18, **caractérisée en ce qu'**elle contient en outre de l'oxyde de zinc, du borate de zinc et/ou du stannate de zinc.

20. Composition ignifuge de polyamide selon au moins l'une quelconque des revendications 1 à 19, **caractérisée en ce qu'**elle contient d'autres additifs, les autres additifs étant choisis dans le groupe des antioxydants, des stabilisants aux UV, des stabilisants aux rayons gamma, des stabilisants à l'hydrolyse, des costabilisants pour les antioxydants, d'antistatiques, d'émulsifiants, d'agents de nucléation, de plastifiants, d'adjuvants de mise en œuvre, de modificateurs de résilience, de colorants, de pigments et/ou d'autres agents ignifuges qui sont différents des composants B), D), E), F), H) et I) .

21. Composition ignifuge de polyamide selon au moins l'une quelconque des revendications 1 à 20, **caractérisée en ce qu'**elle contient, comme autre composant, du fer sous forme d'une substance contenant du fer, la quantité de substance contenant du fer représentant 0,0001 à 10% en poids du mélange total.

22. Utilisation d'une composition ignifuge de polyamide selon l'une ou plusieurs des revendications 1 à 21 dans le domaine électrique et électronique, dans ou pour des connecteurs, des pièces en contact avec le courant dans des distributeurs de courant (protection par disjoncteur à courant de défaut), des cartes , des masses de scellement, des prises, des disjoncteurs, des boîtiers de lampe (boîtier de DEL), des boîtiers de condensateur, des corps de bobine et des ventilateurs pour des contacts de protection, des prises, dans et sur des platines, des boîtiers pour des prises, des câbles, des circuits imprimés souples, des câbles de charge pour portables, des capots de moteur, des revêtements textiles et d'autres produits.

23. Utilisation selon la revendication 22, **caractérisée en ce que** les polyamides se trouvent sous forme de corps moulés, de films, de fils, de feuilles et/ou de fibres.

24. Article tridimensionnel comprenant la composition ignifuge de polyamide selon l'une ou plusieurs des revendications 1 à 21, **caractérisée en ce qu'**il s'agit de corps moulés, de corps moulés par injection, de masses extrudées et/ou de pièces extrudées.
